(19) Europäisches Patentamt
European Patent Office
Office européen des brevets

(11) **EP 3 955 170 A1**

(12) **DEMANDE DE BREVET EUROPEEN**

(43) Date de publication:
**16.02.2022 Bulletin 2022/07**

(51) Classification Internationale des Brevets (IPC):
**G06N 3/063** (2006.01)    **G06N 3/04** (2006.01)

(21) Numéro de dépôt: **21188496.0**

(52) Classification Coopérative des Brevets (CPC):
**G06N 3/063; G06N 3/0454**

(22) Date de dépôt: **29.07.2021**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **03.08.2020 FR 2008234**

(71) Demandeur: **Commissariat à l'Energie Atomique et aux Energies Alternatives**
**75015 Paris (FR)**

(72) Inventeur: **HARRAND, Michel**
**38054 GRENOBLE Cedex 09 (FR)**

(74) Mandataire: **Marks & Clerk France**
**Immeuble "Visium"**
**22, avenue Aristide Briand**
**94117 Arcueil Cedex (FR)**

(54) **ARCHITECTURE DE CALCUL SYSTOLIQUE POUR LA MISE EN OEUVRE DE RÉSEAUX DE NEURONES ARTIFICIELS TRAITANT PLUSIEURS TYPES DE CONVOLUTIONS**

(57) Circuit de calcul de données de sortie d'une couche d'un réseau de neurones artificiels comprenant : une mémoire externe et un système intégré sur puce comprenant :
un réseau de calcul comprenant au moins un ensemble d'au moins un groupe d'unités de calcul ; le réseau de calcul comprenant en outre une mémoire tampon connectée aux unités de calcul ;
un étage mémoire de poids comprenant une pluralité de mémoires pour stocker les coefficients synaptiques; chaque mémoire étant connectée à toutes les unités de calcul de même rang;
Des moyens de contrôle configurés pour distribuer les données d'entrée tel que chaque ensemble de groupes d'unités de calcul reçoit un vecteur colonne du sous matrice stockée dans la mémoire tampon incrémenté d'une colonne. Tous les ensembles reçoivent simultanément des vecteurs colonnes décalés entre eux d'un nombre de lignes égal à un paramètre de décalage de l'opération de convolution.

FIG.4

**Description**

**Champ d'application**

L'invention concerne généralement les réseaux neuro-morphiques numériques et plus particulièrement une architecture de calculateur pour le calcul de réseaux de neurones artificiels à base de couches convolutionnelles.

**Problème soulevé**

Les réseaux de neurones artificiels constituent des modèles de calculs imitant le fonctionnement des réseaux de neurones biologiques. Les réseaux de neurones artificiels comprennent des neurones interconnectés entre eux par des synapses, qui sont par exemple implémentées par des mémoires numériques. Les réseaux de neurones artificiels sont utilisés dans différents domaines de traitement du signal (visuel, sonore, ou autre) comme par exemple dans le domaine de la classification d'image ou de la reconnaissance d'image.

Les réseaux de neurones convolutionnels correspondent à un modèle particulier de réseau de neurones artificiels. Les réseaux de neurones convolutionnels ont été décrits initialement dans l'article de K. Fukushima, « Neocognitron: A self-organizing neural network model for a mechanism of pattern récognition unaffected by shift in position. Biological Cybernetics, 36(4): 193-202, 1980. ISSN 0340-1200. doi: 10.1007/BF00344251 ».

Les réseaux de neurones convolutionnels (désignés en langue anglo-saxonne par les expressions "convolutional neural networks", ou "deep (convolutional) neural networks" ou encore "ConvNets") sont des réseaux de neurones inspirés par les systèmes visuels biologiques.

Les réseaux de neurones convolutionnels (CNN) sont utilisés notamment dans des systèmes de classifications d'images pour améliorer la classification. Appliqués à la reconnaissance d'images, ces réseaux permettent un apprentissage des représentations intermédiaires d'objets dans les images qui sont plus petites et généralisables pour des objets similaires, ce qui facilite leur reconnaissance. Cependant, le fonctionnement intrinsèquement parallèle et la complexité des classificateurs de type réseau de neurones convolutionnels rend difficile leur implémentation dans des systèmes embarqués à ressources limitées. En effet, les systèmes embarqués imposent de fortes contraintes par rapport à la surface du circuit et à la consommation électrique.

Le réseau de neurones convolutionnels est basé sur une succession de couches de neurones, qui peuvent être des couches convolutionnelles (Convolutional Layer en anglais) ou des couches entièrement conenctées (généralement à la fin du réseau). Dans les couches convolutionnelles, seulement un sous-ensemble des neurones d'une couche est connecté à un sous-ensemble des neurones d'une autre couche. Par ailleurs, les réseaux de neurones convolutionnels peuvent traiter plusieurs canaux d'entrée pour générer plusieurs canaux de sortie. Chaque canal d'entrée correspond, par exemple à une matrice de données différente.

Sur les canaux d'entrée se présentent des images d'entrée sous forme matricielle formant ainsi une matrice d'entrée ; une image matricielle de sortie est obtenue sur les canaux de sortie.

Les matrices de coefficients synaptiques pour une couche convolutionnelle sont aussi appelées « noyaux de convolution ».

En particulier, les réseaux de neurones convolutionnels comprennent une ou plusieurs couche(s) de convolution qui sont particulièrement couteuses en nombres d'opération. Les opérations effectuées sont principalement des opérations de multiplication et accumulation (MAC). Par ailleurs, pour respecter les contraintes de latence et temps de traitement propres aux applications visées, il est nécessaire de paralléliser au maximum les calculs.

Plus particulièrement, lorsque les réseaux de neurones convolutionnels sont implémentés dans un système embarqué à ressources limitées (par opposition à une implémentation dans des infrastructures de centres de calcul), la réduction de consommation électrique devient un critère primordial pour la réalisation du réseau de neurones. Dans ce type d'implémentation, les solutions de l'état de l'art présentent des mémoires externes aux unités de calcul. Cela augmente le nombre d'opérations de lecture et d'écriture entre des puces électroniques distinctes du système. Ces opérations d'échange de données entre différentes puces sont très énergivores pour un système dédié à une application mobile (téléphonie, véhicule autonome, robotique..). En effet, une connexion métallique entre une unité de calcul du réseau de neurones artificiels et une mémoire externe (de type SRAM ou DRAM par exemple) présente une capacité parasite par rapport à la masse électrique d'une dizaine de picofarads. D'un autre côté, l'intégration d'un bloc mémoire dans le circuit intégré contenant l'unité de calcul réduit drastiquement la capacité parasite par rapport à la masse électrique de la liaison entre les deux circuits jusqu'à quelques nanofarads. Cela induit une réduction de la consommation électrique dynamique du réseau de neurones proportionnelle à l'ensemble des capacités des connexions métalliques par rapport à la masse électrique selon l'équation suivante : $P_{dyn}= \frac{1}{2} \times C_L \times VDD^2 \times f$ avec $C_L$ la capacité totale sur l'ensemble des connexions électriques, VDD la tension d'alimentation du circuit, f la fréquence du circuit et $P_{dyn}$ la puissance dynamique du circuit.

Il existe donc un besoin pour des calculateurs aptes à mettre en œuvre une couche de convolution d'un réseau de neurones permettant de satisfaire aux contraintes des systèmes embarqués et des applications visées. Plus particulièrement, il existe un besoin pour adapter les architectures de calculateurs de réseaux de neurones pour intégrer des blocs mémoires dans la même puce contenant les unités de calculs (MAC) pour limiter les distances parcourues par les données de calcul et ainsi diminuer la consommation de la globalité du réseau de neurones, tout en limitant le nombre d'opérations d'écriture sur lesdites mémoires.

Parmi les avantages de la solution proposée par l'invention on cite la possibilité de la réalisation de multiples types de convolution avec le même opérateur tout en économisant les moyens techniques nécessaires pour le stockage de résultats partiels par rapport aux systèmes de l'état de l'art. La solution technique selon l'invention permet ainsi de réduire les échanges de données entre les unités de calculs et les mémoires de données via une gestion localisée de ces échanges selon les différents types de convolution.

De plus, l'organisation du flux de données d'entrée pour les calculs réalisées pour une couche convolutionnelle présente un point crucial pour minimiser les échanges de données entre les mémoires qui stockent ces données d'entrée et les unités de calcul de données de sortie d'une couche de neurones du réseau.

**Réponse au problème et apport solution**

La publication « Eyeriss: A Spatial Architecture for Energy-Efficient Dataflow for Convolutional Neural Networks » de Chen et Al présente un calculateur de réseau de neurones convolutionnel mettant en œuvre des techniques de parallélisme de calcul de couches convolutionnelles permettant de minimiser la consommation énergétique du circuit. Cependant la solution présentée par Chen n'est efficace qu'avec des opérations de convolutions de type 3x3 avec un paramètre de décalage égal à 1 rendant ainsi l'utilisation de la solution très limitative et l'implémentation avec d'autres types de convolution complexes.

**Réponse au problème et apport solution**

L'invention propose une architecture de calculateur permettant de réduire la consommation électrique d'un réseau de neurones implémenté sur une puce, et de limiter le nombre d'accès en lecture et en écriture entre les unités de calcul du calculateur et les mémoires externes. L'invention propose une architecture de calculateur accélérateur de réseau de neurones artificiels tel que l'ensemble des mémoires contenant les coefficients synaptiques soient implémentées sur la même puce contenant les unités de calcul des couches de neurones du réseau. L'architecture selon l'invention présente une flexibilité de configuration permettant de réaliser des calculs avec plusieurs types de convolutions selon la taille (kernel en Anglais) et le pas d'avancement (stride en Anglais) du filtre de convolution. D'ailleurs, les solutions présentées par l'état de l'art sont dédiées à un panel limité de types de convolutions, généralement de taille 3X3. Les architectures de l'état de l'art ne sont pas prévues pour des mémoires de poids internes limitant la consommation du calculateur de réseau de neurones tel que décrit dans l'invention. Le calculateur selon l'invention permet aussi l'utilisation des mémoires tampons contenant les coefficients synaptiques et qui échangent avec une mémoire de poids centrale. L'association de cette flexibilité de configuration et d'une distribution adéquate des coefficients synaptiques dans les mémoires internes des poids permet d'exécuter les nombreuses opérations de calcul pendant une phase d'inférence ou une phase d'apprentissage. Ainsi, l'architecture proposée par l'invention minimise les échanges de données entre les unités de calculs et les mémoires externes ou situées à une distance relativement lointaine dans le système sur puce. Cela induit une amélioration de la performance énergétique du calculateur de réseaux de neurones embarqué dans un système mobile. L'architecture de calculateur accélérateur selon l'invention est compatible avec les technologies émergentes de mémoires de type NVM (Non Volatile Memory en Anglais) nécessitant un nombre limité d'opérations d'écriture.

**Résumé /Revendications**

L'invention a pour objet un circuit de calcul pour calculer des données de sortie d'une couche d'un réseau de neurones artificiels à partir de données d'entrée. Le réseau de neurones est composé d'une succession de couches étant chacune constituée d'un ensemble de neurones. Chaque couche est connectée à une couche adjacente via une pluralité de synapses associées à un ensemble de coefficients synaptiques formant au moins une matrice de poids ; le réseau de calcul (CALC) comprenant :

- une mémoire externe pour stocker toutes les données d'entrée et de sortie de tous les neurones d'au moins la couche du réseau en cours de calcul ;
- un système intégré sur puce comprenant :

    i. un réseau de calcul comprenant au moins un ensemble d'au moins un groupe d'unités de calcul de rang j=0 à M avec M un entier positif ; chaque groupe comprenant au moins une unité de calcul de rang n=0 à N avec N un entier positif pour calculer une somme de données d'entrée pondérées par des coefficients synaptiques ; le réseau de calcul comprenant en outre une mémoire tampon pour stocker un sous-ensemble des données d'entrée provenant de la mémoire ; la mémoire tampon étant connectée aux unités de calcul ;

ii. un étage mémoire de poids comprenant une pluralité de mémoires de rang n=0 à N pour stocker les coefficients synaptiques des matrices de poids ; chaque mémoire de rang n=0 à N étant connectée à toutes les unités de calcul de même rang n de chacun les groupes ;

iii. des moyens de contrôle configurés pour distribuer les données d'entrée de la mémoire tampon vers lesdits ensembles de manière à ce que chaque ensemble de groupes d'unités de calcul reçoit un vecteur colonne de la sous matrice stockée dans la mémoire tampon incrémenté d'une colonne par rapport au vecteur colonne reçu précédent ; tous les ensembles reçoivent simultanément des vecteurs colonnes décalés entre eux d'un nombre de lignes égal à un paramètre de décalage de l'opération de convolution.

Selon un aspect particulier de l'invention, les moyens de contrôles sont en outre configurés pour organiser la lecture des coefficients synaptiques des mémoires de poids vers lesdits ensembles.

Selon un aspect particulier de l'invention, les moyens de contrôles sont implémentés par un ensemble de générateurs d'adresses.

Selon un aspect particulier de l'invention, le système intégré sur puce comprend une mémoire interne pour servir d'extension à la mémoire volatile externe ; la mémoire interne étant connectée pour écrire dans la mémoire tampon.

Selon un aspect particulier de l'invention, les données de sortie d'une couche sont organisées dans une pluralité de matrices de sortie de rang q=0 à Q avec Q un entier positif, chaque matrice de sortie étant obtenue à partir d'au moins une matrice d'entrée de rang p=0 à P avec P un entier positif,

pour chaque couple de matrice d'entrée de rang p et matrice de sortie de rang q, les coefficients synaptiques associés forment une matrice de poids, le calcul d'une données de sortie de la matrice de sortie comprend le calcul de la somme des données d'entrée d'une sous-matrice de la matrice d'entrée pondérée par les coefficients synaptiques associés,

Les sous-matrices d'entrée ayant les mêmes dimensions que la matrice de poids et chaque sous-matrice d'entrée est obtenue par la réalisation d'un décalage égal au paramètre de décalage de l'opération de convolution réalisée selon la direction des lignes ou des colonnes à partir d'une sous-matrice d'entrée adjacente.

Selon un aspect particulier de l'invention, chaque unité de calcul comprend :

i. un registre d'entrée pour stocker une donnée d'entrée ;
ii. un circuit multiplieur pour calculer le produit d'une donnée d'entrée et d'un coefficient synaptique ;
iii. un circuit additionneur ayant une première entrée connectée à la sortie du circuit multiplieur et étant configuré pour réaliser les opérations de sommation de résultats de calcul partiels d'une somme pondérée ;
iv. au moins un accumulateur pour stocker des résultats de calcul partiels ou finaux de la somme pondérée.

Selon un aspect particulier de l'invention, chaque mémoire de poids de rang n=0 à N contient l'intégralité des coefficients synaptiques appartenant à toutes les matrices de poids associées à la matrice de sortie de rang q=0 à Q tel que q modulo N+1 est égal à n.

Selon un aspect particulier de l'invention, le circuit de calcul réalise un parallélisme de calcul de canaux de sortie tel que les unités de calcul de rang n=0 à N des différents groupes d'unités de calcul réalisent les opérations de multiplication et d'addition pour calculer une matrice de sortie de rang q=0 à Q tel que q modulo N+1 est égal à n.

Selon un aspect particulier de l'invention, chaque ensemble comprend un seul groupe d'unités de calcul, chaque unité de calcul comprenant une pluralité d'accumulateurs ; chaque ensemble de rang k avec k=1 à K avec K un entier strictement positif, pour une donnée d'entrée reçue, réalise successivement les opérations d'addition et de multiplication pour calculer des résultats partiels de sortie appartenant à une ligne de rang i=0 à L, avec L un entier positif, de la matrice de sortie à partir de ladite donnée d'entrée tel que i modulo K est égal à (k-1).

Selon un aspect particulier de l'invention, les résultats partiels de chacun des résultats de sortie de la ligne de la matrice de sortie calculée par une unité de calcul sont stockés dans un accumulateur distinct appartenant à la même unité de calcul.

Selon un aspect particulier de l'invention, chaque ensemble comprend une pluralité de groupes d'unités de calcul réalise un parallélisme spatial de calcul de la matrice de sortie

tel que chaque ensemble de rang k avec k=1 à K réalise parallèlement les opérations d'addition et de multiplication pour calculer des résultats partiels de sortie appartenant à une ligne de rang i de la matrice de sortie tel que i modulo K est égal à (k-1) et tel que chaque groupe de rang j=0 à M dudit ensemble réalise les opérations d'addition et de multiplication pour calculer des résultats partiels de sortie appartenant à une colonne de rang l de la matrice de sortie tel que l modulo M+1 est égal à j.

Selon un aspect particulier de l'invention, le circuit de calcul comprend trois ensembles, chaque ensemble comprenant trois groupes d'unités de calcul.

Selon un aspect particulier de l'invention, les mémoires de poids sont de type NVM.

**Brève description des dessins**

D'autres caractéristiques et avantages de la présente invention apparaîtront mieux à la lecture de la description qui suit en relation aux dessins annexés suivants.

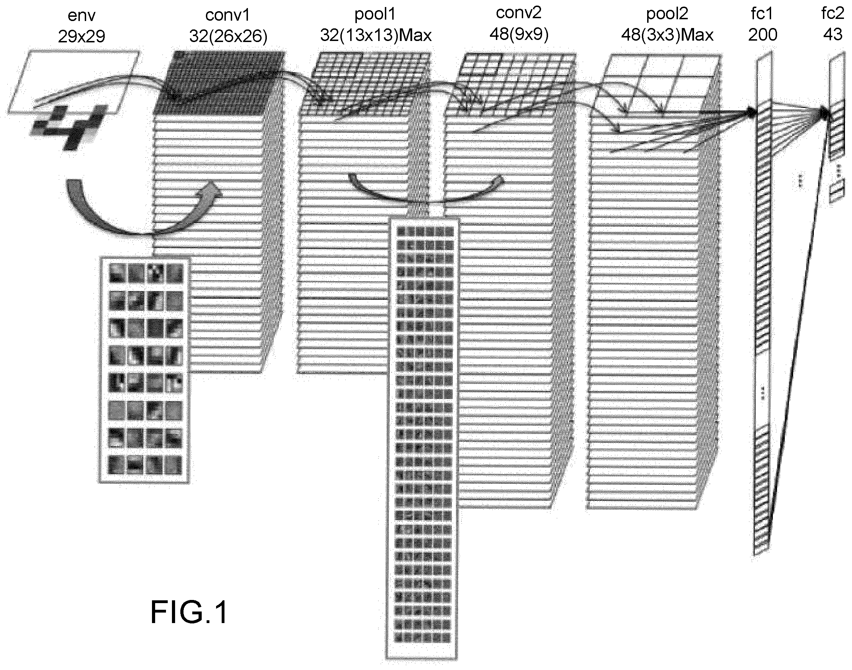

[Fig. 1] La figure 1 représente un exemple de réseau de neurones convolutionnels contenant des couches convolutionnelles et des couches entièrement connectées.

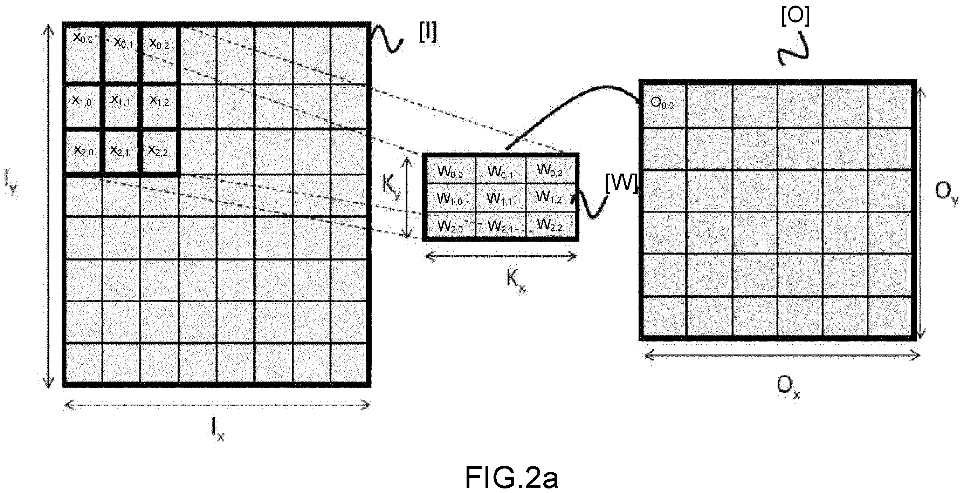

[Fig. 2a] La figure 2a représente une première illustration du fonctionnement d'une couche de convolution d'un réseau de neurones convolutionnel avec un canal d'entrée et un canal de sortie.

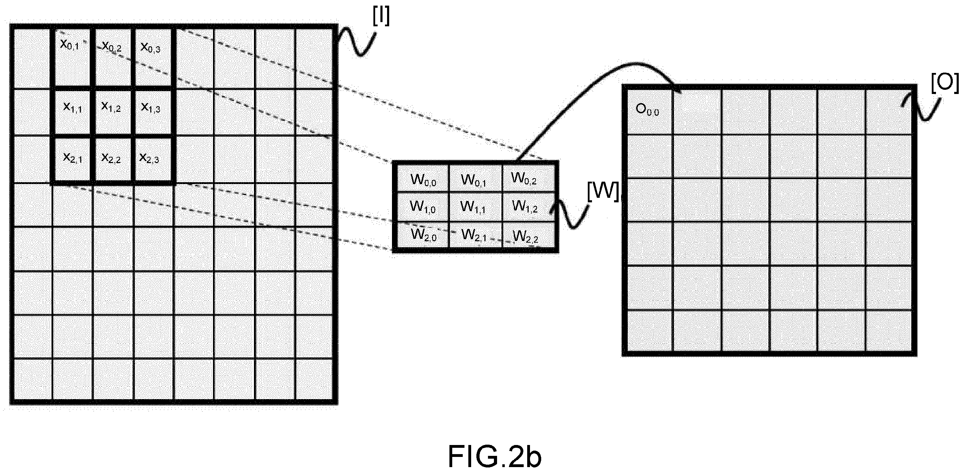

[Fig. 2b] La figure 2b représente une deuxième illustration du fonctionnement d'une couche de convolution d'un réseau de neurones convolutionnel avec un canal d'entrée et un canal de sortie.

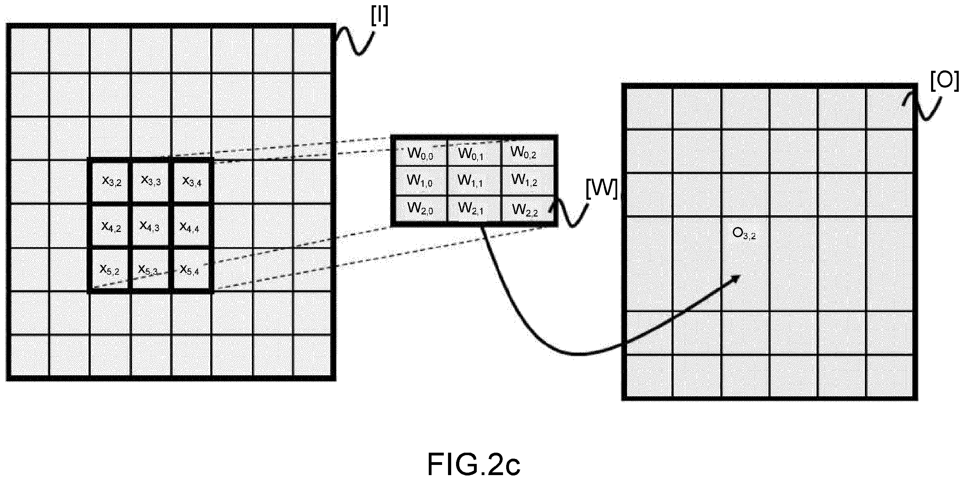

[Fig. 2c] La figure 2c représente une troisième illustration du fonctionnement d'une couche de convolution d'un réseau de neurones convolutionnel avec un canal d'entrée et un canal de sortie.

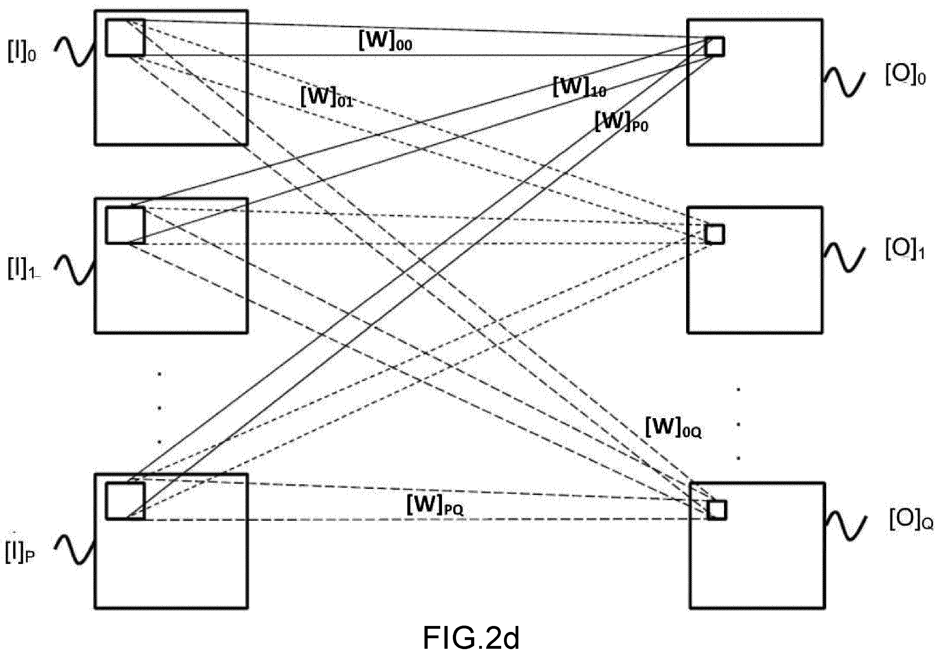

[Fig. 2d] La figure 2d représente une illustration du fonctionnement d'une couche de convolution d'un réseau de neurones convolutionnel avec plusieurs canaux d'entrée et plusieurs canaux de sortie.

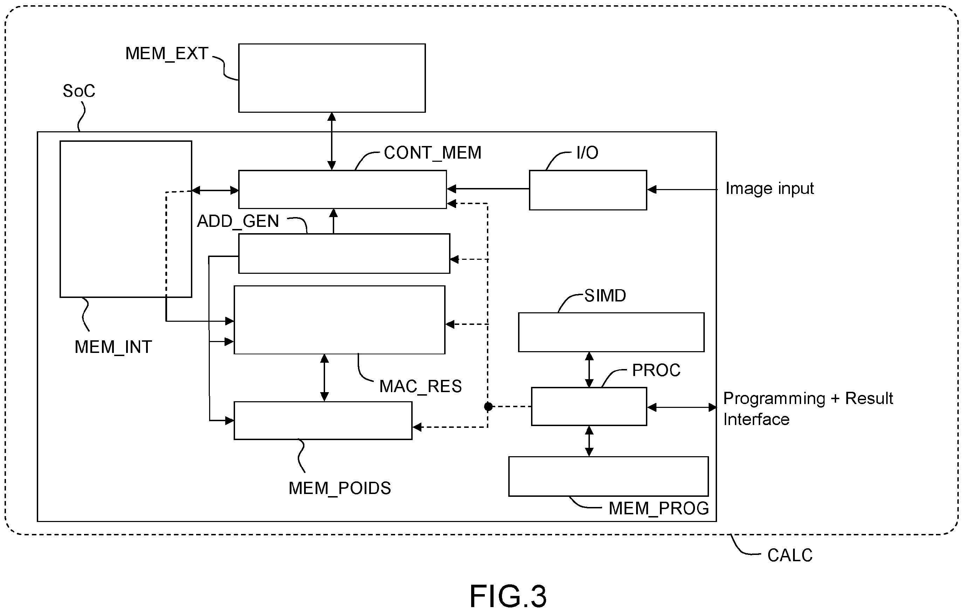

[Fig. 3] La figure 3 illustre un schéma fonctionnel de l'architecture générale du circuit de calcul d'un réseau de neurones convolutionnel selon l'invention.

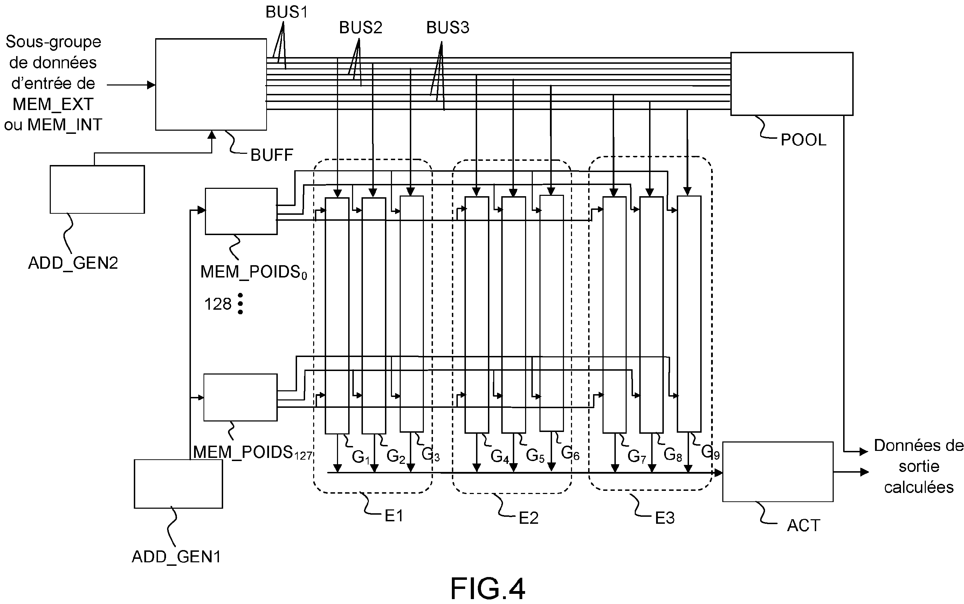

[Fig. 4] La figure 4 illustre un schéma fonctionnel d'un exemple de réseau de calcul implémenté sur un système sur puce selon un premier mode de réalisation de l'invention.

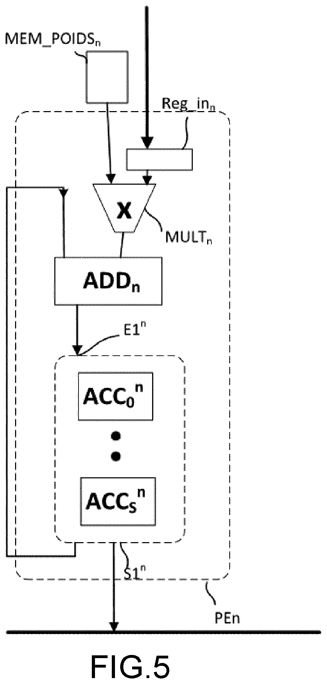

[Fig. 5] La figure 5 illustre un schéma fonctionnel d'un exemple d'unité de calcul appartenant à un groupe d'unités de calcul du réseau de calcul selon un mode de réalisation de l'invention.

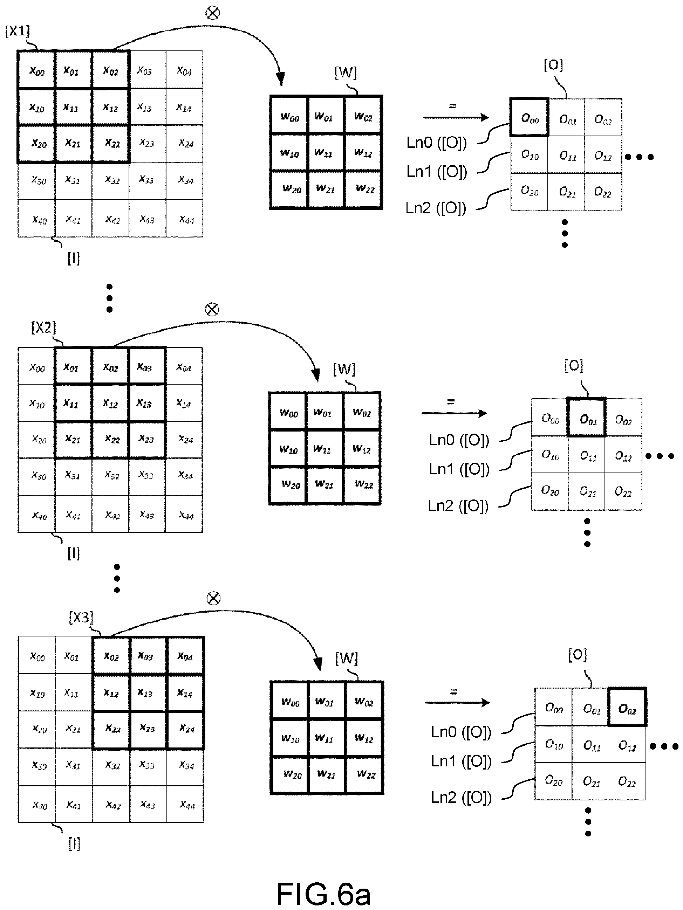

[Fig. 6a] La figure 6a représente une première illustration des opérations de convolution réalisables avec un parallélisme spatial par le réseau de calcul selon un mode de réalisation pour obtenir une partie de la matrice de sortie sur un canal de sortie à partir d'une matrice d'entrée sur un canal d'entrée lors d'une convolution 3x3s1.

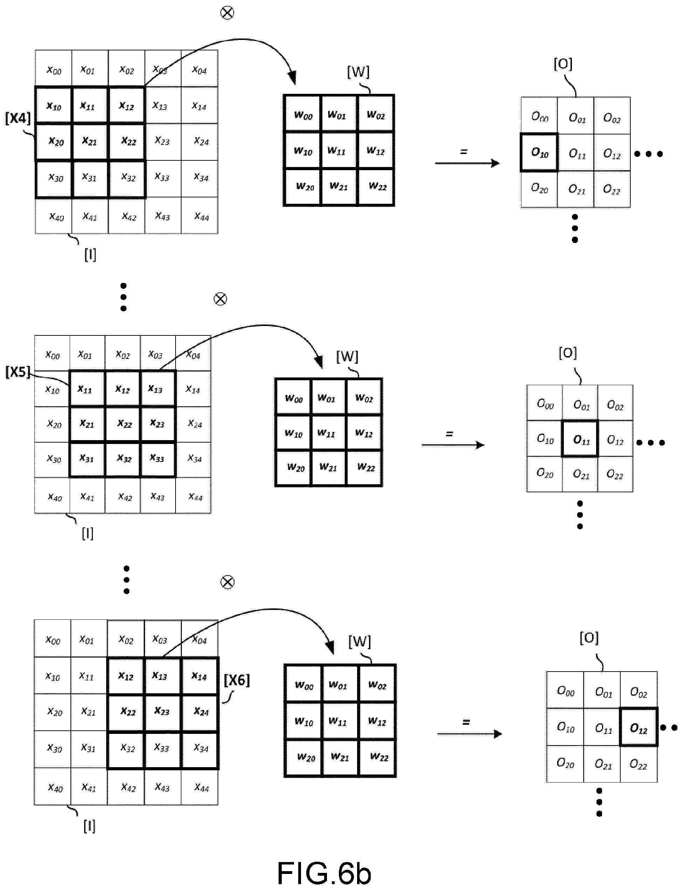

[Fig. 6b] La figure 6b représente une deuxième illustration des opérations de convolution réalisables avec un parallélisme spatial par le réseau de calcul selon un mode de réalisation pour obtenir une partie de la matrice de sortie sur un canal de sortie à partir d'une matrice d'entrée sur un canal d'entrée lors d'une convolution 3x3s1.

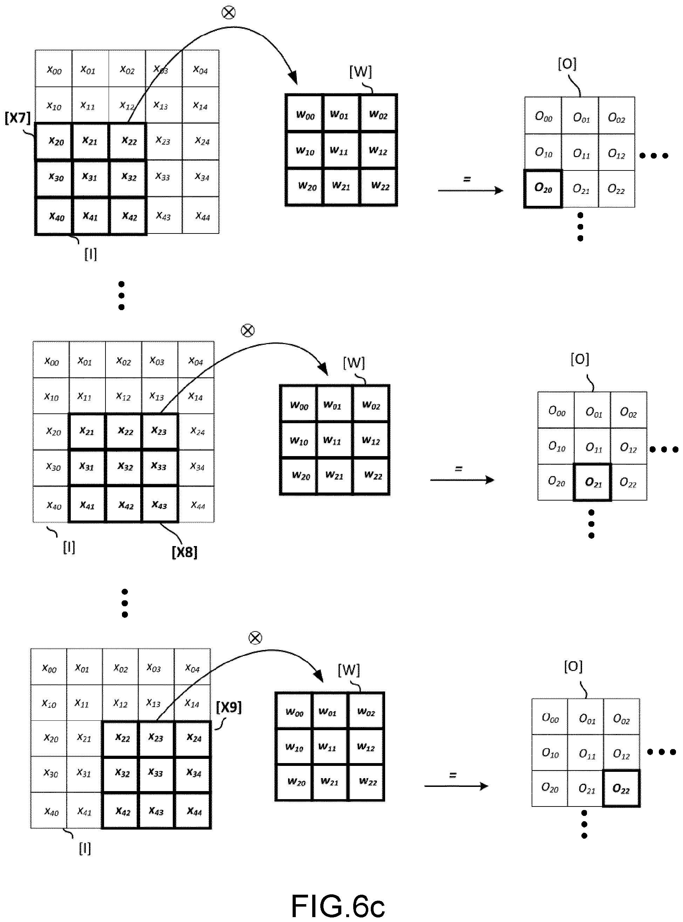

[Fig. 6c] La figure 6c représente une troisième illustration des opérations de convolution réalisables avec un parallélisme spatial par le réseau de calcul selon un mode de réalisation pour obtenir une partie de la matrice de sortie sur un canal de sortie à partir d'une matrice d'entrée sur un canal d'entrée lors d'une convolution 3x3s1.

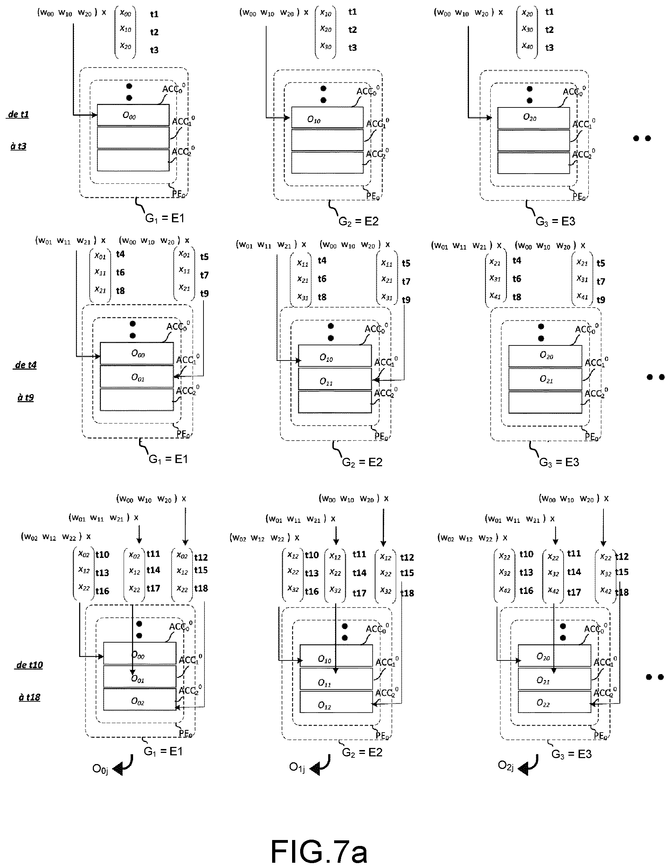

[Fig. 7a] La figure 7a illustre des étapes de fonctionnement d'un réseau de calcul selon un premier mode de calcul avec « un parallélisme de lignes » de l'invention pour calculer une couche convolutionnelle de type 3x3s1.

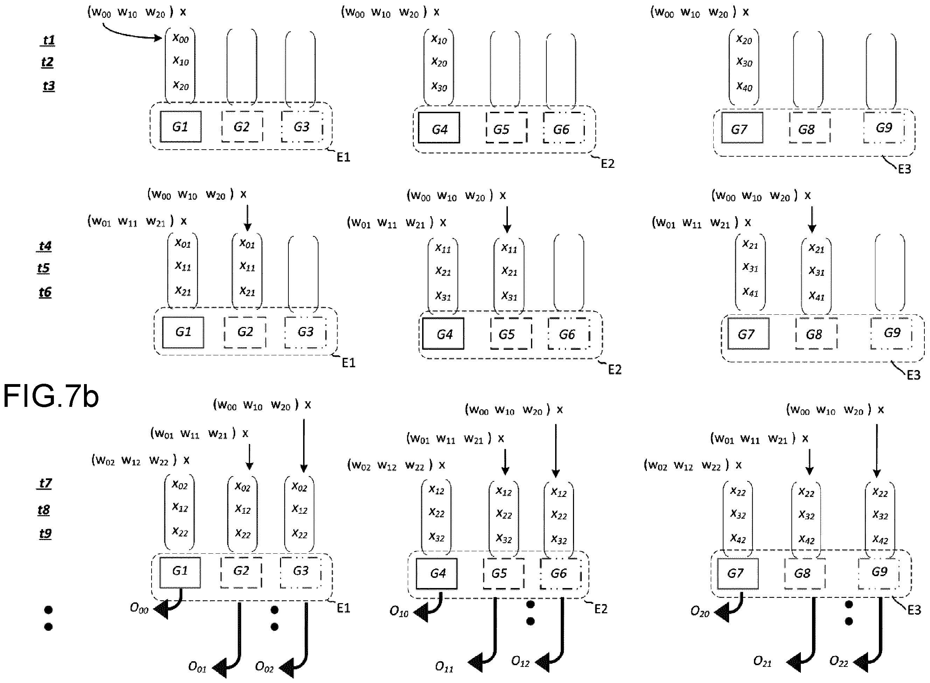

[Fig. 7b] La figure 7b illustre des étapes de fonctionnement d'un réseau de calcul selon un second mode de calcul avec « un parallélisme spatial de lignes et de colonnes » de l'invention pour calculer une couche convolutionnelle de type 3x3s1.

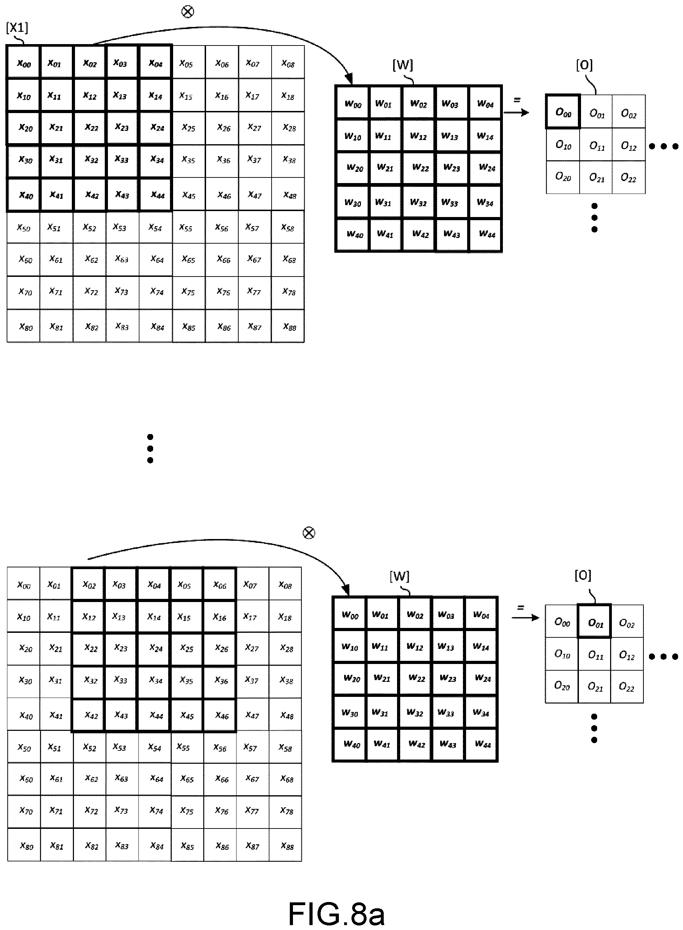

[Fig. 8a] La figure 8a représente une première illustration des opérations de convolution réalisables avec un parallélisme spatial par le réseau de calcul selon un mode de réalisation pour obtenir une partie de la matrice de sortie sur un canal de sortie à partir d'une matrice d'entrée sur un canal d'entrée lors d'une convolution 5x5s2.

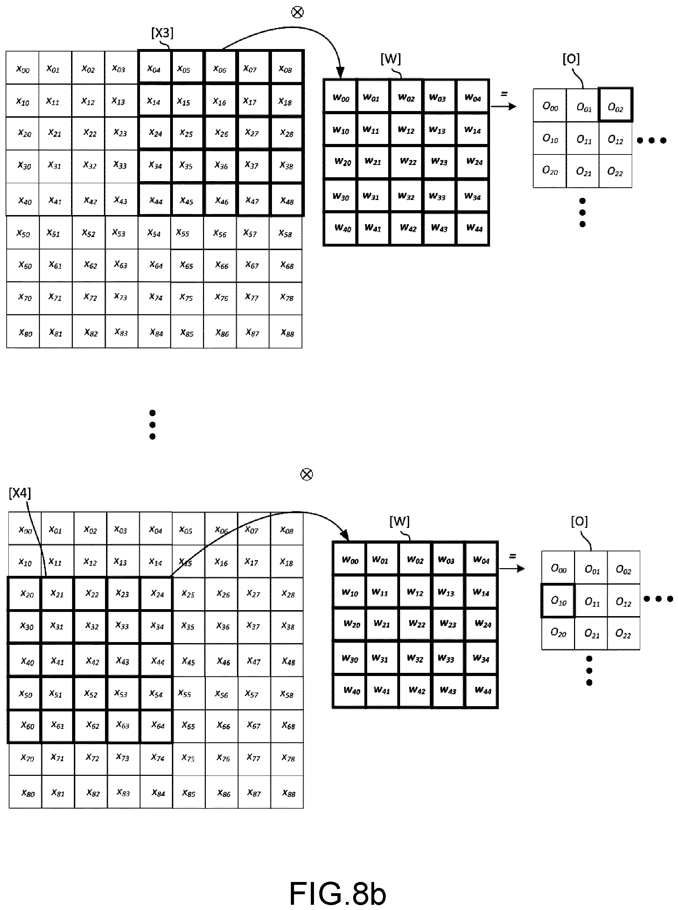

[Fig. 8b] La figure 8b représente une deuxième illustration des opérations de convolution réalisables avec un parallélisme spatial par le réseau de calcul selon un mode de réalisation pour obtenir une partie de la matrice de sortie sur un canal de sortie à partir d'une matrice d'entrée sur un canal d'entrée lors d'une convolution 5x5s2.

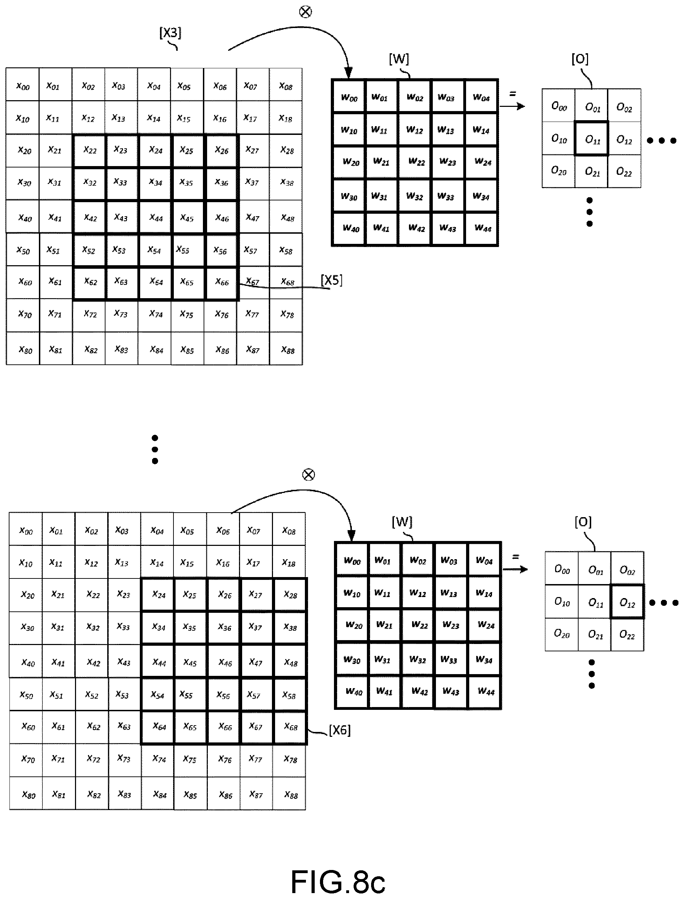

[Fig. 8c] La figure 8c représente une troisième illustration des opérations de convolution réalisables avec un parallélisme spatial par le réseau de calcul selon un mode de réalisation pour obtenir une partie de la matrice de sortie sur un canal de sortie à partir d'une matrice d'entrée sur un canal d'entrée lors d'une convolution 5x5s2.

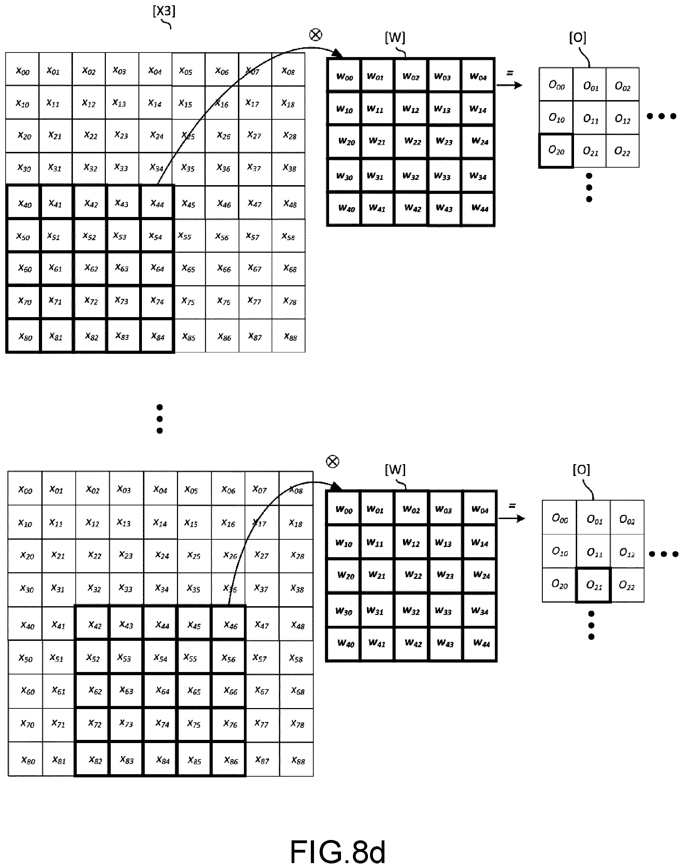

[Fig. 8d] La figure 8d représente une quatrième illustration des opérations de convolution réalisables avec un parallélisme spatial par le réseau de calcul selon un mode de réalisation pour obtenir une partie de la matrice de sortie sur un canal de sortie à partir d'une matrice d'entrée sur un canal d'entrée lors d'une convolution 5x5s2.

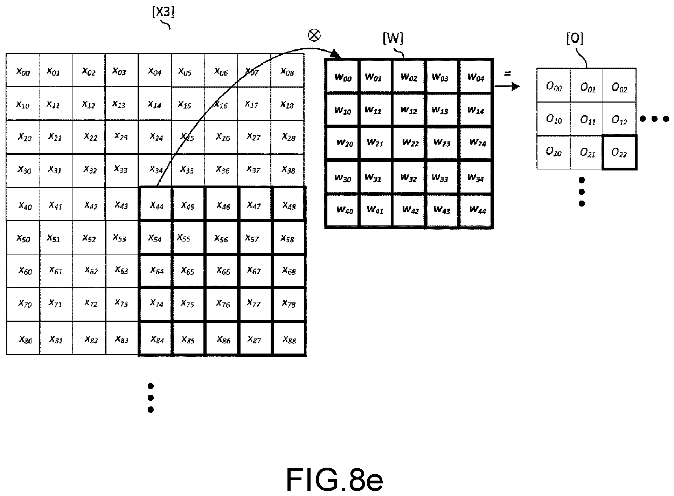

[Fig. 8e] La figure 8e représente une cinquième illustration des opérations de convolution réalisables avec un parallélisme spatial par le réseau de calcul selon un mode de réalisation pour obtenir une partie de la matrice de sortie sur un canal de sortie à partir d'une matrice d'entrée sur un canal d'entrée lors d'une convolution 5x5s2.

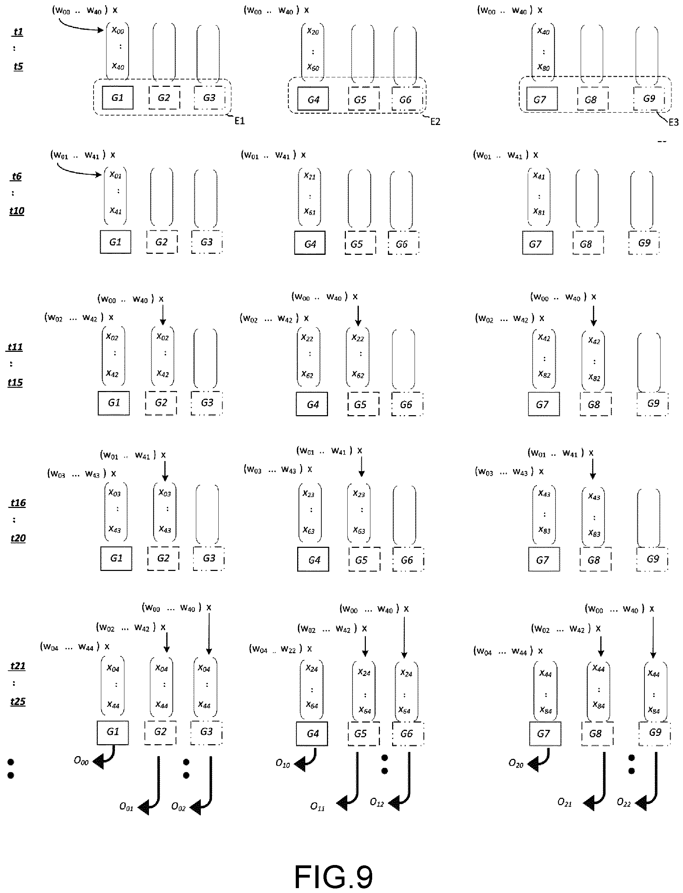

[Fig. 9] La figure 9 illustre des étapes de fonctionnement d'un réseau de calcul selon un second mode de calcul avec « un parallélisme spatial de lignes et de colonnes » de l'invention pour calculer une couche convolutionnelle de type 5x5s2.

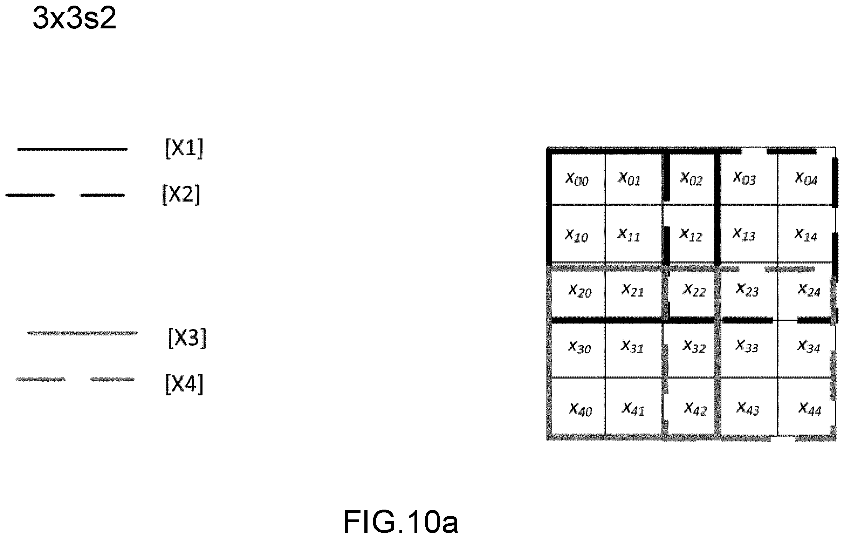

[Fig. 10a] La figure 10a représente des opérations de convolution réalisables avec un parallélisme spatial par le réseau de calcul selon l'invention pour obtenir une partie de la matrice de sortie sur un canal de sortie à partir d'une matrice d'entrée sur un canal d'entrée lors d'une convolution 3x3s2.

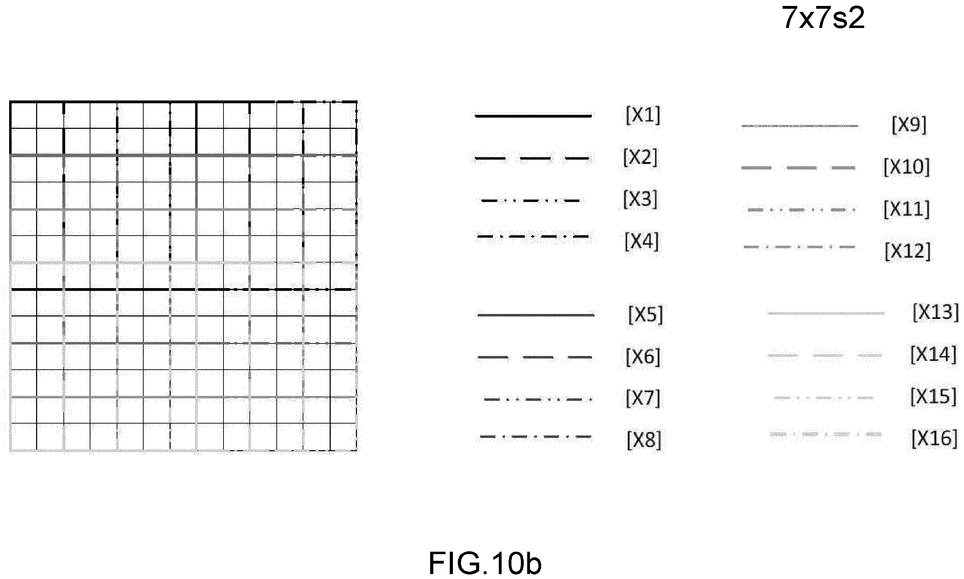

[Fig. 10b] La figure 10b représente des opérations de convolution réalisables avec un parallélisme spatial par le réseau de calcul selon l'invention pour obtenir une partie de la matrice de sortie sur un canal de sortie à partir d'une matrice d'entrée sur un canal d'entrée lors d'une convolution 7x7s2.

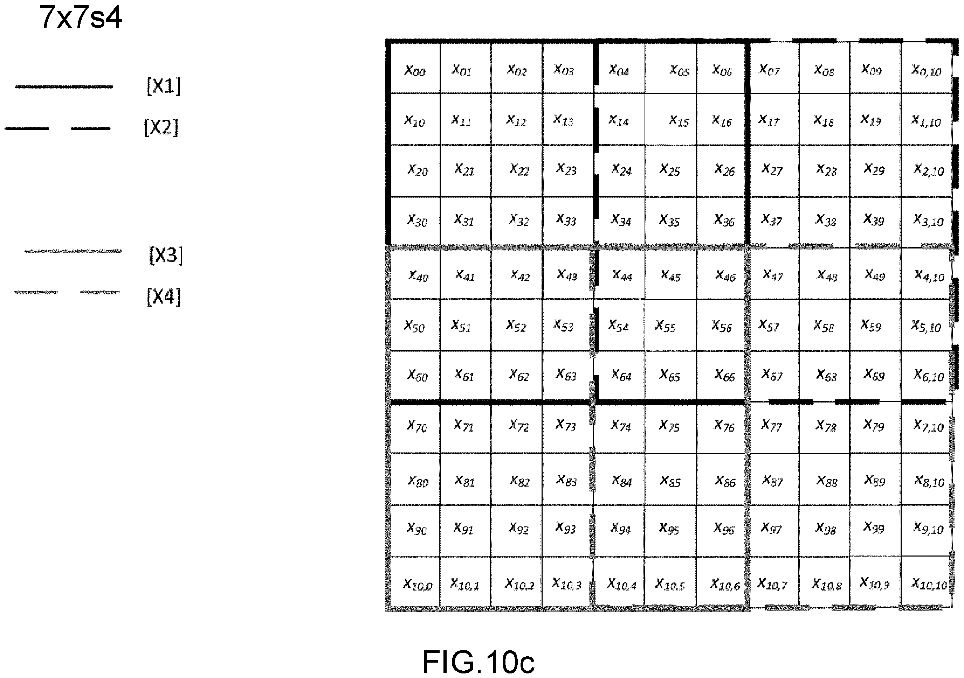

[Fig. 10c] La figure 10c représente des opérations de convolution réalisables avec un parallélisme spatial par le réseau de calcul selon l'invention pour obtenir une partie de la matrice de sortie sur un canal de sortie à partir d'une matrice d'entrée sur un canal d'entrée lors d'une convolution 7x7s4.

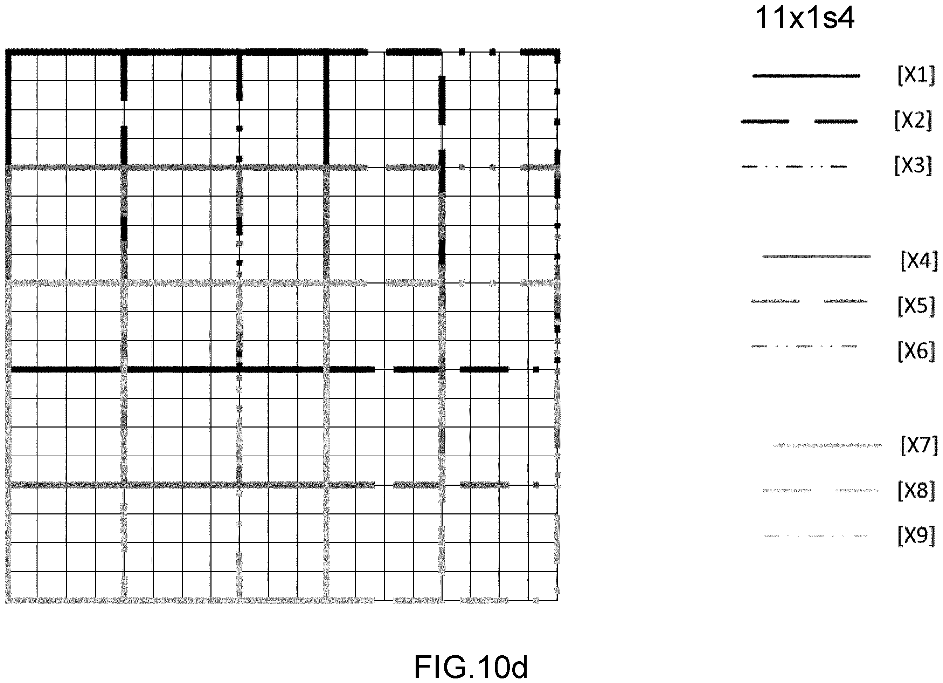

[Fig. 10d] La figure 10d représente des opérations de convolution réalisables avec un parallélisme spatial par le réseau de calcul selon l'invention pour obtenir une partie de la matrice de sortie sur un canal de sortie à partir d'une matrice d'entrée sur un canal d'entrée lors d'une convolution 11x11s4.

A titre indicatif, on commence par décrire un exemple de structure globale d'un réseau de neurone convolutionnel contenant des couches convolutionnelles et des couches entièrement connectées.

La figure 1 représente l'architecture globale d'un exemple de réseau convolutionnel pour la classification d'images. Les images en bas de la figure 1 représentent un extrait des noyaux de convolution de la première couche. Un réseau de neurones artificiel (encore appelé réseau de neurones « formel » ou désigné simplement par l'expression « réseau de neurones » ci-après) est constitué d'une ou plusieurs couches de neurones, interconnectées entre elles.

Chaque couche est constituée d'un ensemble de neurones, qui sont connectés à une ou plusieurs couches précédentes. Chaque neurone d'une couche peut être connecté à un ou plusieurs neurones d'une ou plusieurs couches précédentes. La dernière couche du réseau est appelée « couche de sortie ». Les neurones sont connectés entre eux par des synapses associés à des poids synaptiques, qui pondèrent l'efficacité de la connexion entre les neurones, et constituent les paramètres réglables d'un réseau. Les poids synaptiques peuvent être positifs ou négatifs.

Les réseaux de neurones dit « convolutionnels » (ou encore « convolutional », « deep convolutional », « convnets ») sont en outre composés de couches de types particuliers telles que les couches de convolution, les couches de regroupement (« pooling » en langue anglo-saxonne) et les couches complètement connectés (« fully connected »). Par définition, un réseau de neurones convolutionnel comprend au moins une couche de convolution ou de « pooling ».

L'architecture du circuit calculateur accélérateur selon l'invention est compatible pour exécuter les calculs des couches convolutionnelles. Nous allons commencer dans un premier temps par détailler les calculs effectués pour une couche convolutionnelles.

Les figures 2a-2d illustrent le fonctionnement général d'une couche de convolution.

La figure 2a représente une matrice d'entrée [I] de taille $(I_x, I_y)$ connectée à une matrice de sortie [O] de taille $(O_x, O_y)$ via une couche de convolution réalisant une opération de convolution à l'aide d'un filtre [W] de taille $(K_x, K_y)$.

Une valeur $O_{i,j}$ de la matrice de sortie [O] (correspondant à la valeur de sortie d'un neurone de sortie) est obtenue en appliquant le filtre [W] sur la sous-matrice correspondant de la matrice d'entrée [I].

D'une façon générale, on définit l'opération de convolution de symbole $\otimes$ entre deux matrices [X] composée par les éléments $x_{i,j}$ et [Y] composée par les éléments $y_{i,j}$ de dimensions égales. Le résultat est la somme des produits des coefficients $x_{i,j}.y_{i,j}$ ayant chacun la même position dans les deux matrices.

Sur la figure 2a, on a représenté la première valeur $O_{0,0}$ de la matrice de sortie [O] obtenue en appliquant le filtre [W] à la première sous-matrice d'entrée notée [X1] de dimensions égales à celle du filtre [W]. Le détail de l'opération de convolution est décrit par l'équation suivante :

$$O_{0,0} = [X1] \otimes [W]$$

D'où

$$O_{0,0} = x_{00}.w_{00} + x_{01}.w_{01} + x_{02}.w_{02} + x_{10}.w_{10} + x_{11}.w_{11} + x_{12}.w_{12} + x_{20}.w_{20} + x_{21}.w_{21} +$$

$$x_{22}.w_{22}.$$

Sur la figure 2b, on a représenté la deuxième valeur $O_{0,1}$ de la matrice de sortie [O] obtenue en appliquant le filtre [W] à la deuxième sous-matrice d'entrée notée [X2] de dimensions égales à celle du filtre [W]. La deuxième sous-matrice d'entrée [X2] est obtenue par le décalage de la première sous-matrice [X1] d'une colonne. On parle ici d'un paramètre de décalage de la convolution (« stride » en anglais) égal à 1.

Le détail du de l'opération de convolution pour obtenir $O_{0,1}$ est décrit par l'équation suivante :

$$O_{0,1} = [X2] \otimes [W]$$

D'où

$$O_{0,1} = x_{01}.w_{00} + x_{02}.w_{01} + x_{03}.w_{02} + x_{11}.w_{10} + x_{12}.w_{11} + x_{13}.w_{12} + x_{21}.w_{20} + x_{22}.w_{21} +$$

$$x_{23}.w_{22}.$$

La figure 2c représente un cas général de calcul d'une valeur $O_{3,2}$ quelconque de la matrice de sortie.

De façon générale, la matrice de sortie [O] est connectée à la matrice d'entrée [I] par une opération de convolution, via un noyau de convolution ou filtre noté [W]. Chaque neurone de la matrice de sortie [O] est connecté à une partie de la matrice d'entrée [I] ; cette partie est appelée « sous-matrice d'entrée » ou encore « champ récepteur du neurone » et elle a les mêmes dimensions que le filtre [W]. Le filtre [W] est commun pour l'ensemble des neurones d'une matrice de sortie [O].

Les valeurs des neurones de sortie $O_{i,j}$ sont données par la relation suivante :

$$O_{i,j} = g\left( \sum_{t=0}^{(K_x-1)} \sum_{l=0}^{(K_y-1)} x_{i.s_i+t,j.s_j+l} . w_{t,l} \right)$$

Dans la formule ci-dessus, g() désigne la fonction d'activation du neurone, tandis que $s_i$ et $s_j$ désignent les paramètres de décalage (« stride » en anglais) vertical et horizontal respectivement. Un tel décalage « stride » correspond au décalage entre chaque application du noyau de convolution sur la matrice d'entrée. Par exemple, si le décalage est supérieur ou égal à la taille du noyau, alors il n'y a pas de chevauchement entre chaque application du noyau.. Nous rappelons que cette formule est valable dans le cas où la matrice d'entrée a été traitée pour rajouter des lignes et des colonnes supplémentaires (Padding en Anglais). La matrice filtre [W] est composée par les coefficients synaptiques $w_{t,l}$ de rangs $t=0$ à $K_x-1$ et $l=0$ à $K_y-1$.

Généralement, chaque couche de neurone convolutionnelle notée $C_k$ peut recevoir une pluralité de matrices d'entrée sur plusieurs canaux d'entrée de rang $p=0$ à P avec P un entier positif et/ou calculer plusieurs matrices de sortie sur une pluralité de canaux de sortie de rang $q=0$ à Q avec Q un entier positif. On note $[W]_{p,q}{}^k$ le filtre correspondant au noyau de convolution qui connecte la matrice de sortie $[O]_q$ à une matrice d'entrée $[I]_p$ dans la couche de neurone $C_k$. Différents filtres peuvent être associés à différentes matrices d'entrée, pour la même matrice de sortie.

Pour simplifier, la fonction d'activation g() n'est pas représentée sur les figures 2a-2d.

Les figures 2a-2c illustrent un cas où une seule matrice de sortie (et donc un seul canal de sortie) [O] est connectée à une seule matrice d'entrée [I] (et donc un seul canal d'entrée).

La figure 2d illustre un autre cas où plusieurs matrices de sortie $[O]_q$ sont connectées chacune à plusieurs matrices d'entrée $[I]_p$. Dans ce cas, chaque matrice de sortie $[O]_q$ de la couche $C_k$ est connectée à chaque matrice d'entrée $[I]_p$ via un noyau de convolution $[W]_{p,q}{}^{,k}$ qui peut être différent selon la matrice de sortie.

Par ailleurs, lorsqu'une matrice de sortie est connectée à plusieurs matrices d'entrée, la couche de convolution réalise, en plus de chaque opération de convolution décrite ci-dessus, une somme des valeurs de sortie des neurones obtenues pour chaque matrice d'entrée. Autrement dit, la valeur de sortie d'un neurone de sortie (ou aussi appelé canaux de sortie) est dans ce cas égale à la somme des valeurs de sorties obtenues pour chaque opération de convolution appliquée à chaque matrice d'entrée (ou aussi appelé canaux d'entrée).

Les valeurs des neurones de sortie $O_{i,j}$ de la matrice de sortie $[O]_q$ sont dans ce cas données par la relation suivante :

$$O_{i,j,q} = g\left(\sum_{p=0}^{P} \sum_{t=0}^{(K_x-1)} \sum_{l=0}^{(K_y-1)} x_{p,i.s_i+t,j.s_j+l} \cdot w_{p,q,t,l}\right)$$

Avec p=0 à P le rang d'une matrice d'entrée $[I]_p$ connectée à la matrice de sortie $[O]_q$ de la couche $C_k$ de rang q=0 à Q via le filtre $[W]_{p,q}{}^{,k}$ composé des coefficients synaptiques $w_{p,q,l}$ de rangs t=0 à $K_x$-1 et 1=0 à $K_y$-1.

Ainsi, pour réaliser le calcul du résultat de sortie d'une matrice de sortie $[O]_q$ de rang q de la couche $C_k$ il est nécessaire de disposer de l'ensemble des coefficients synaptiques des matrices de poids $[W]_{p,q}{}^{,k}$ connectant toutes les matrices d'entrée $[I]_p$ à la matrice de sortie $[O]_q$ de rang q.

La figure 3 illustre un exemple d'un diagramme fonctionnel de l'architecture générale du circuit de calcul d'un réseau de neurone convolutionnel selon l'invention.

Le circuit de calcul d'un réseau de neurone convolutionnel CALC, comprend une mémoire volatile externe MEM_EXT pour stocker les données d'entrée et de sortie de tous les neurones d'au moins la couche du réseau en cours de calcul pendant une phase d'inférence ou d'apprentissage et un système intégré sur une même puce SoC.

Le système intégré SoC comprend un réseau de calcul MAC_RES constitué d'une pluralité d'unités de calcul pour calculer des neurones d'une couche du réseau de neurones, une mémoire volatile interne MEM_INT pour stocker les données d'entrée et de sortie des neurones de la couche en cours de calcul, un étage mémoire de poids MEM_POIDS comprenant une pluralité de mémoires non volatiles internes de rang n=0 à N notées MEM_POIDS$_n$ pour stocker les coefficients synaptiques des matrices de poids, un circuit de contrôle des mémoires CONT_MEM connecté à l'ensemble des mémoires MEM_INT, MEM_EXT et MEM_POIDS pour jouer le rôle d'interface entre la mémoire externe MEM_EXT et le système sur puce SoC, un ensemble de générateurs d'adresses ADD_GEN pour organiser la distribution de données et des coefficients synaptiques lors d'une phase de calcul et pour organiser le transfert des résultats calculés à partir des différentes unités de calcul du réseau de calcul MAC_RES vers l'une des mémoires MEM_EXT ou MEM_INT.

Le système sur puce SoC comprend notamment une interface image notée I/O pour recevoir les images d'entrée pour l'ensemble du réseau lors d'une phase d'inférence ou apprentissage. Il convient de noter que les données d'entrées reçues via l'interface I/O ne sont pas limitées à des images mais peuvent être, plus généralement, de nature diverse.

Le système sur puce SoC comprend également un processeur PROC pour configurer le réseau de calcul MAC_RES et les générateurs d'adresses ADD_GEN selon le type de la couche neuronale calculée et la phase de calcul réalisée. Le processeur PROC est connecté à une mémoire non-volatile interne MEM_PROG qui contient la programmation informatique exécutable par le processeur PROC.

Optionnellement, le système sur puce SoC comprend un accélérateur de calcul de type SIMD (Single Instruction on Multiple Data) connecté au processeur PROC pour améliorer la performance du processeur PROC.

Les mémoires de données externe MEM_EXT et interne MEM_INT peuvent être réalisées avec des mémoires de type DRAM.

La mémoire des données interne MEM_INT peut aussi être réalisée avec des mémoires de type SRAM.

Le processeur PROC, l'accélérateur SIMD, la mémoire de programmation MEM_PROG, l'ensemble des générateurs d'adresse ADD_GEN et le circuit de contrôle des mémoires CONT_MEM font partie des moyens de contrôle du circuit de calcul d'un réseau de neurone convolutionnel CALC.

Les mémoires des données de poids MEM_POIDS$_n$ peuvent être réalisées avec des mémoires basées sur la technologie émergente de type NVM.

L'invention se distingue des solutions de l'état de l'art par une organisation spécifique des unités de calcul dans le réseau de calcul CALC permettant de gagner en performance de calcul avec des techniques de parallélisme. Il s'agit ici de la possibilité de combiner un parallélisme de calcul spatial (où l'ensemble des unités de calcul réalisent les calculs de différents neurones appartenant à la même matrice de sortie en parallèle) avec un parallélisme de canaux (où les calculs associés à différents canaux de sortie mais ayant la même matrice d'entrée sont réalisés en parallèle). La combinaison de ces deux types de parallélisme permet d'améliorer la performance du calculateur.

De plus, l'invention se distingue des solutions de l'état de l'art par une gestion de la distribution des données d'entrée au réseau de calcul CALC permettant de minimiser les échanges de données avec la mémoire externe MEM_EXT et une distribution adéquate des coefficients synaptiques dans les mémoires de poids internes afin de réduire la consommation électrique due aux opérations de lecture des mémoires externes.

De plus, l'invention offre une flexibilité de configuration. Un premier mode de calcul, décrit ultérieurement, appelé « parallélisme en lignes » permet de réaliser tous les types de convolution. Un second mode de calcul, décrit ultérieurement, appelé « parallélisme spatial en lignes et en colonnes » permet de réaliser un large panel d'opérations de convolution couvrant notamment les convolutions de type 3x3 stride1, 3x3 stride2, 5x5stride1, 7x7stride2, 1x1 stride1 et 11x11 stride4.

La figure 4 illustre un exemple d'un schéma fonctionnel du réseau de calcul MAC_RES implémenté dans le système sur puce SoC selon un premier mode de réalisation de l'invention permettant de réaliser un calcul avec un « parallélisme spatial en lignes et en colonnes ». Le réseau de calcul MAC_RES comprend une pluralité de groupes d'unités de calcul noté $G_j$ de rang j=0 à M avec M un entier positif, chaque groupe comprend une pluralité d'unités de calcul noté $PE_n$ de rang n=0 à N avec N un entier positif.

Avantageusement, le nombre de groupe d'unités de calcul $G_j$ est égal aux nombre de points dans un filtre de convolution (qui est égale au nombre d'opérations de convolution à réaliser, à titre d'exemple 9 pour une convolution 3x3, 25 pour une convolution 5x5). Cette structure permet de réaliser un parallélisme spatial où chaque groupe d'unités de calcul $G_j$ réalise un calcul de convolution d'une sous-matrice [X1] par un noyau [W] pour obtenir un résultat de sortie $O_{i,j}$.

Avantageusement, le nombre d'unités de calcul $PE_n$ appartenant à un même groupe noté $G_j$ est égal au nombre de canaux de sortie d'une couche convolutionnelle permettant de réaliser le parallélisme de canaux décrit précédemment.

Sans perte de généralité, l'exemple d'implémentation illustré dans la figure 4, comprend 9 groupes d'unités de calcul ; chaque groupe comprend 128 unités de calcul noté $PE_n$. Ce choix de conception permet de couvrir un large panel de types de convolution tel que 3x3 stride1, 3x3 stride2, 5x5 stride1, 7x7 stride2, 1x1 stride1 et 11x11 stride4 basé sur le parallélisme spatial assuré par les groupes d'unités de calcul et tout en calculant parallèlement 128 canaux de sortie. Un exemple de déroulement des calculs réalisés par le réseau de calcul MAC_RES selon ces choix de conception sera détaillé ultérieurement, à titre indicatif.

Pendant le calcul d'une couche de neurones, chacun des groupes d'unités de calcul $G_j$ reçoit les données d'entrée $x_{ij}$ provenant d'une mémoire tampon intégrée dans le réseau de calcul MAC_RES noté BUFF. La mémoire tampon BUFF, reçoit un sous-ensemble des données d'entrée de la mémoire externe MEM_EXT ou de la mémoire interne MEM_INT. Des données d'entrée provenant d'un ou plusieurs canaux d'entrée sont utilisées pour le calcul d'une ou plusieurs matrices de sortie sur un ou plusieurs canaux de sortie.

La mémoire tampon BUFF est ainsi une mémoire de taille réduite utilisée pour stocker temporairement des données d'entrée pour le calcul d'une partie des neurones de la couche en cours de calcul. Cela permet de minimiser le nombre d'échanges entre les unités de calcul et les mémoires externe MEM_EXT ou interne MEM_INT de tailles beaucoup plus importante. La mémoire tampon BUFF comprend un port d'écriture connecté aux mémoires MEM_EXT ou MEM_INT et 9 ports de lecture connectés chacun à un groupe d'unité de calcul $G_j$. Comme décrit précédemment, le système sur puce SoC comprend une pluralité de mémoires de poids $MEM\_POIDS_n$ de rang n=1 à N. Chaque mémoire de poids de rang n est connectée à toutes les unités de calcul $PE_n$ de même rang des différents groupes d'unités de calcul $G_j$. Plus précisément, la mémoire de poids de rang 0 $MEM\_POIDS_0$ est connectée à l'unité de calcul $PE_0$ du premier groupe d'unités de calcul $G_1$, mais aussi à l'unité de calcul $PE_0$ du deuxième groupe d'unités de calcul $G_2$, à l'unité de calcul $PE_0$ du troisième groupe d'unités de calcul $G_3$, à l'unité de calcul $PE_0$ du quatrième groupe d'unités de calcul $G_4$ et à toutes unités de calcul de rang 0 $PE_0$ appartenant à un groupe $G_j$ quelconque .Généralement, chaque mémoire de poids de rang n $MEM\_POIDS_n$ est connectée aux unités de calcul de rang n de tous les groupes d'unités de calcul $G_j$.

Chaque mémoire de poids de rang n $MEM\_POIDS_n$ contient toutes les matrices de poids $[W]_{p,n}{}^{,k}$ associés aux synapses connectées à tous les neurones des matrices de sortie correspondant au canal de sortie du même rang n avec n un entier variant de 0 à 127 dans l'exemple d'implémentation de la figure 4.

Alternativement, l'étage de mémoire de poids MEM_POIDS peut être réalisé via une seule mémoire connectée à toutes les unités de calcul $PE_n$ du réseau de calcul MAC_RES et contenant des coefficients synaptiques organisés sur des mots machine (bit word en Anglais). La taille d'un mot est égale au nombre d'unités de calculs $PE_n$ appartenant à un groupe Gj multipliée par la taille d'un poids. En d'autres termes, le nombre de poids contenus dans un mot est égal au nombre d'unités de calculs $PE_n$ appartenant à un groupe $G_j$.

Il en résulte qu'au moment de la réalisation du calcul d'un canal de sortie de rang q d'une couche de neurones, chaque coefficient synaptique de la matrice de poids $[W]_{p,q}{}^{,k}$ associée audit canal de sortie est stocké uniquement dans la mémoire de poids $MEM\_POIDS_n$ de même rang n=q lorsque le nombre de canaux de sortie est inférieur ou égale au nombre de mémoires de poids.

Plus généralement, lorsque le nombre de canaux de sortie Q est supérieur au nombre de mémoires de poids N+1, et au moment de la réalisation du calcul d'un canal de sortie de rang q=0 à Q d'une couche de neurone, chaque coefficient synaptique de la matrice de poids $[W]_{p,q}{}^{,k}$ associée audit canal de sortie est stocké uniquement dans la mémoire de poids $MEM\_POIDS_n$ de rang n=0 à N+1 tel que q modulo N+1 est égal à n.

Alternativement, il est possible de charger successivement, pour chaque nouveau canal de sortie, la mémoire de poids $MEM\_POIDS_n$ de rang n=0 à N+1 à partir d'une mémoire de poids centrale ; avec la séquence de matrices $[W]_{p,q1}{}^{,k}$ $[W]_{p,q1}{}^{,k}$ $[W]_{p,q3}{}^{,k}$ associées respectivement aux canaux de sortie de rang $q_1$, $q_2$, $q_3$ etc tel que $q_1 < q_2, < q_3$, $q_1$ modulo N+1 = n, $q_2$ modulo N+1 = n et $q_3$ modulo N+1 = n etc.

La distribution spécifique des coefficients synaptiques dans les mémoires de poids décrite précédemment permet de stocker d'une manière ciblée les coefficients synaptiques de manière à réduire la taille des mémoires de poids $MEM\_POIDS_n$ et donc de densifier l'intégration des mémoires dans le circuit intégré de calcul. Cela offre l'avantage de minimiser les échanges de données entre les unités de calculs et les mémoires externes ou situées à une distance relativement lointaine dans le système sur puce et donc réduit la latence du système.

La lecture du contenu de la mémoire tampon BUFF est réalisée par un étage générateur d'adresse dédié appartenant à l'ensemble de générateurs d'adresses ADD_GEN.

La lecture du contenu des mémoires de poids internes $MEM\_POIDS_n$ est réalisée par un étage générateur d'adresse dédié appartenant à l'ensemble de générateurs d'adresses ADD_GEN.

Avantageusement, le réseau de calcul MAC_RES comprend notamment un circuit de calcul de moyenne ou de maximum, noté POOL, permettant de réaliser les calculs de couche de « Max Pool » ou de « Average Pool ». Un traitement de « Max pooling » d'une matrice d'entrée [I] génère une matrice de sortie [O] de taille inférieure à celle de la matrice d'entrée en prenant le maximum des valeurs d'une sous-matrice [X1] par exemple de la matrice d'entrée [I] dans le neurone de sortie $O_{00}$. Un traitement de « average pooling » calcule la valeur moyenne de l'ensemble des neurones d'une sous-matrice de la matrice d'entrée.

Avantageusement, le réseau de calcul MAC_RES comprend notamment un circuit de calcul d'une fonction d'activation noté ACT, généralement utilisée dans les réseaux de neurones convolutionnels. La fonction d'activation g(x) est une fonction non-linéaire, comme une fonction ReLu par exemple.

Avantageusement, l'architecture décrite dans la figure 4 permet notamment de réaliser un calcul avec un « parallélisme uniquement en lignes » en fournissant les mêmes coefficients synaptiques pour toutes les unités de calcul $PE_n$ de même rang des différents groupes d'unités de calcul $G_j$.

La figure 5 illustre un exemple d'un diagramme fonctionnel d'une unité de calcul $PE_n$ appartenant à un groupe d'unité de calcul $G_j$ du réseau de calcul MAC_RES selon un mode de réalisation de l'invention.

Chaque unité de calcul $PE_n$ de rang n=0 à 127 appartenant à un groupe d'unités de calcul $G_j$, comprend un registre d'entrée noté $Reg\_in_n$ pour stocker une donnée d'entrée utilisée lors du calcul d'un neurone du la couche en cours ; un circuit multiplieur noté $MULT_n$ à deux entrées et une sortie, un circuit additionneur noté $ADD_n$ ayant une première entrée connectée à la sortie du circuit multiplieur $MULT_n$ et étant configuré pour réaliser des opérations de sommation de résultats de calcul partiels d'une somme pondérée ; au moins un accumulateur noté $ACC_i{}^n$ pour stocker des résultats de calcul partiels ou finaux de la somme pondérée calculée par l'unité de calcul $PE_n$ de rang n. L'ensemble des accumulateurs est connecté à la deuxième sortie de l'additionneur $ADD_n$ pour ajouter, à chaque cycle, le résultat de multiplication obtenu à la somme pondérée partielle obtenue préalablement.

Dans le mode de réalisation décrit adapté pour un calcul avec un « parallélisme spatial en lignes et en colonnes », lorsque le nombre de canaux de sortie est supérieur au nombre d'unités de calcul $PE_n$, chaque unité de calcul $PE_n$ comprend une pluralité d'accumulateurs $ACC_i{}^n$. L'ensemble des accumulateurs appartenant à la même unité de calcul, comporte une entrée notée $E1^n$ en écriture sélectionnable parmi les entrées de chaque accumulateur de l'ensemble et une sortie notée $S1^n$ en lecture sélectionnable parmi les sorties de chaque accumulateur de l'ensemble. Il est possible de réaliser cette fonctionnalité de sélection d'entrée en écriture et de sortie en lecture d'un empilement de registres accumulateurs par des commandes d'activation de chargement des registres en écriture et par un agencement de multiplexeurs pour les sorties non représentés sur la figure 5.

Pendant une phase de propagation des données, le multiplieur $MULT_n$ réalise la multiplication d'une donnée d'entrée $x_{i,j}$ par le coefficient synaptique adéquat $w_{ij}$ selon les modalités des calculs de convolution détaillés précédemment. En effet, pour calculer le neurone de sortie $O_{00}$ égal à une convolution $[X1] \otimes [W]$ le multiplieur réalise la multiplication $x_{00}.w_{00}$ et stocke le résultat partiel dans un des accumulateurs de l'unité de calcul puis calcule le deuxième terme de la somme pondérée $x_{10}.w_{10}$ qui sera additionné au premier terme enregistré $x_{00}.w_{00}$ et ainsi de suite jusqu'à calculer l'intégralité de la somme pondérée égale au neurone de sortie $O_{00} = [X1] \otimes [W]$.

Nous rappelons que : $O_{0,0} = x_{00}.w_{00} + x_{10}.w_{10} + x_{20}.w_{20} + x_{01}.w_{01} + x_{11}.w_{11} + x_{21}.w_{21} + x_{02}.w_{02} + x_{12}.w_{12} + x_{22}.w_{22}$ Sans sortir du cadre de l'invention, d'autres implémentations sont envisageables pour réaliser une unité de calcul $PE_n$.

Dans la section précédente nous avons décrit un exemple d'implémentation physique du calculateur selon l'invention adaptée préférentiellement à la réalisation du calcul avec un « parallélisme spatiale en lignes et en colonnes ».

Dans la section suivante nous allons décrire les différents modes de calcul réalisables avec le calculateur selon l'invention à savoir le premier mode de calcul avec « parallélisme des lignes » et le second mode de calcul avec « parallélisme spatial en lignes et en colonnes ».Dans la section suivante, nous allons expliquer en détail le fonctionnement du réseau de calcul MAC_RES pour réaliser le calcul de multiples types de convolution selon la taille du filtre et le paramètre de décalage de l'opération de convolution.

Nous allons commencer par la convolution avec un filtre de taille 3x3 avec un paramètre de décalage égal à 1 pour un réseau de calculateurs MAC_RES composé de 3x3 groupes d'unités de calcul. Pour simplifier la compréhension du mode de fonctionnement nous allons d'abord nous limiter à une structure avec un seul canal d'entrée et un seul canal de sortie. Ayant un seul canal de sortie, chaque groupe d'unité de calcul $G_1$ à $G_g$ comprend une seule unité de calcul $PE_0$. Ainsi, il existe une seule mémoire de poids $MEM\_POIDS_0$ connectée à l'ensemble des unités de calcul et contenant les coefficients synaptiques $w_{ij}$ de $[W]_{p,q}^{,k}$ avec p=0 et q=0. (puisqu'on se limite à un seul canal d'entrée et un seul canal de sortie pour l'explication).

Cet agencement est purement à titre explicatif, le cas pratique avec plusieurs canaux d'entrée et plusieurs canaux de sortie applique le même principe de calcul exposé ci-dessous avec une distribution spécifique des coefficients synaptiques $w_{ij}$ des filtres $[W]_{p,q}^{,k}$ dans les mémoires de poids $MEM\_POIDS_n$.

En effet, l'ensemble des matrices de poids $[W]_{p,q}^{,k}$ connectées au canal de sortie de rang q pour tout canal d'entrée de rang p sont stockées dans les mémoires de poids $MEM\_POIDS_n$ de rang n=q. L'ensemble des unités de calcul $PE_n$ de rang n=q appartenant aux différents groupes $G_j$ réalisent l'intégralité des opérations de multiplication et d'addition pour obtenir la matrice de sortie $[O]_q$ sur le canal de sortie de rang q lors d'une phase d'inférence ou une phase de propagation.

Les figures 6a, 6b et 6c représentent des opérations de convolution réalisables avec un parallélisme spatial par le réseau de calcul selon un mode de réalisation pour obtenir une partie de la matrice de sortie [O] sur un canal de sortie à partir d'une matrice d'entrée sur un canal d'entrée lors d'une convolution 3x3s1.

Nous nous limitons à représenter dans les figures 6a, 6b et 6c la partie d'une matrice d'entrée [I] composée des sous-matrices (ou « champ récepteur du neurone ») ayant un chevauchement avec la sous-matrice [X1]. Cela se traduit par l'utilisation d'au moins une donnée d'entrée $x_{i,j}$ commune avec la sous-matrice [X1]. Ainsi, il est possible de réaliser des calculs utilisant ces données d'entrée communes par différents groupes d'unités de calcul $G_j$ composés par une seule unité de calcul $PE_0$ dans cet exemple illustratif.

Les figures 6a-6c illustrent les opérations de convolution réalisées pour obtenir la partie de la matrice de sortie [O]. Ladite partie (ou sous-matrice) est obtenue suite aux opérations de convolution de type 3x3s1 avec la matrice filtre [W] réalisées parallèlement par le réseau de calcul MAC_RES.

Alors, il est possible de réaliser un parallélisme spatial de calcul de convolution de type 3x3s1 d'une partie de taille 5x5 de la matrice d'entrée [I] pour obtenir une partie de taille 3x3 de la matrice de sortie [O].

La matrice filtre [W] de coefficients $w_{i,j}$ est composée de trois vecteurs colonne de taille 3 notés respectivement Col0([W]), Col1([W]), Col2([W]). Col0([W])=($w_{00}$ $w_{10}$ $w_{20}$) ; Col1([W])=($w_{01}$ $w_{11}$ $w_{21}$) ; Col2([W])=($w_{02}$ $w_{12}$ $w_{22}$).

Le vecteur ligne égal à la transposée d'un vecteur colonne Col([W]) est noté Col([W])$^T$.

La sous-matrice [X1] est composée de trois vecteurs colonnes de taille 3 notés respectivement Col0([X1]), Col1([X1]), Col2([X1]). Col0([X1])=($x_{00}$ $x_{10}$ $x_{20}$) ; Col1([X1])=($x_{01}$ $x_{11}$ $x_{21}$) ; Col2([X1])=($x_{02}$ $x_{12}$ $x_{22}$).

Le résultat de sortie $O_{0,0}$ de la matrice de sortie [O] est obtenu par le calcul suivant : $O_{0,0} = [X1] \otimes [W]$

$$O_{0,0} = Col0([W])^T . Col0([X1]) + Col1([W])^T . Col1([X1]) + Col2([W])^T . Col2([X1])$$

$$O_{0,0} = (x_{00}.w_{00} + x_{10}.w_{10} + x_{20}.w_{20}) + (x_{01}.w_{01} + x_{11}.w_{11} + x_{21}.w_{21}) + (x_{02}.w_{02} + x_{12}.w_{12} + x_{22}.w_{22})$$

La sous-matrice [X2] est composée de trois vecteurs colonnes de taille 3 notés respectivement Col0([X2]), Col1([X2]), Col2([X2]). Col0([X2])=($x_{01}$ $x_{11}$ $x_{21}$) ; Col1([X2])=($x_{02}$ $x_{12}$ $x_{22}$) ; Col2([X2])=($x_{03}$ $x_{13}$ $x_{23}$).

Le résultat de sortie $O_{0,1}$ de la matrice de sortie [O] est obtenu par le calcul suivant : $O_{0,1} = [X2] \otimes [W]$

$$O_{0,1} = Col0([W])^T . Col0([X2]) + Col1([W])^T . Col1([X2]) + Col2([W])^T . Col2([X2])$$

$$O_{0,1} = (x_{01}.w_{00} + x_{11}.w_{10} + x_{21}.w_{20}) + (x_{02}.w_{01} + x_{12}.w_{11} + x_{22}.w_{21}) + (x_{03}.w_{02} + x_{13}.w_{12} + x_{23}.w_{22})$$

La sous-matrice [X3] est composée de trois vecteurs colonnes de taille 3 notés respectivement Col0([X3]), Col1([X3]), Col2([X3]). Col0([X3])=( $x_{02}$ $x_{12}$ $x_{22}$) ; Col1([X3])=( $x_{03}$ $x_{13}$ $x_{23}$) ; Col2([X3])=( $x_{04}$ $x_{14}$ $x_{24}$).

Le résultat de sortie $O_{02}$ de la matrice de sortie [O] est obtenu par le calcul suivant : $O_{02} = [X3] \otimes [W]$

$$O_{02} = Col0([W])^T . Col0([X3]) + Col1([W])^T . Col1([X3]) + Col2([W])^T . Col2([X3])$$

$$O_{02} = (x_{02}.w_{00} + x_{12}.w_{10} + x_{22}.w_{20}) + (x_{03}.w_{01} + x_{13}.w_{11} + x_{23}.w_{21}) + (x_{04}.w_{02} + x_{14}.w_{12} + x_{24}.w_{22})$$

La sous-matrice [X4] est composée de trois vecteurs colonnes de taille 3 notés respectivement Col0([X4]), Col1([X4]), Col2([X4]). Col0([X4])=( $x_{10}$ $x_{20}$ $x_{30}$) ; Col1([X4])=( $x_{11}$ $x_{21}$ $x_{31}$) ; Col2([X4])=( $x_{12}$ $x_{22}$ $x_{32}$).

Le résultat de sortie $O_{10}$ de la matrice de sortie [O] est obtenu par le calcul suivant : $O_{10} = [X4] \otimes [W]$

$$O_{10} = Col0([W])^T . Col0([X4]) + Col1([W])^T . Col1([X4]) + Col2([W])^T . Col2([X4])$$

$$O_{10} = (x_{10}.w_{00} + x_{20}.w_{10} + x_{30}.w_{20}) + (x_{11}.w_{01} + x_{21}.w_{11} + x_{31}.w_{21}) + (x_{12}.w_{02} + x_{22}.w_{12} + x_{32}.w_{22})$$

La sous-matrice [X5] est composée de trois vecteurs colonnes de taille 3 notés respectivement Col0([X5]), Col1([X5]), Col2([X5]). Col0([X5])=( $x_{11}$ $x_{21}$ $x_{31}$) ; Col1([X5])=( $x_{12}$ $x_{22}$ $x_{32}$) ; Col2([X5])=( $x_{13}$ $x_{23}$ $x_{33}$).

Le résultat de sortie $O_{11}$ de la matrice de sortie [O] est obtenu par le calcul suivant : $O_{11} = [X5] \otimes [W]$

$$O_{11} = Col0([W])^T . Col0([X5]) + Col1([W])^T . Col1([X5]) + Col2([W])^T . Col2([X5])$$

$$O_{11} = (x_{11}.w_{00} + x_{21}.w_{10} + x_{31}.w_{20}) + (x_{12}.w_{01} + x_{22}.w_{11} + x_{32}.w_{21}) + (x_{13}.w_{02} + x_{23}.w_{12} + x_{33}.w_{22}).$$

La sous-matrice [X6] est composée de trois vecteurs colonnes de taille 3 notés respectivement Col0([X6]), Col1([X6]), Col2([X6]). Col0([X6])=( $x_{12}$ $x_{22}$ $x_{32}$) ; Col1([X6])=( $x_{13}$ $x_{23}$ $x_{33}$) ; Col2([X6])=( $x_{14}$ $x_{24}$ $x_{34}$).

Le résultat de sortie $O_{12}$ de la matrice de sortie [O] est obtenu par le calcul suivant : $O_{12} = [X6] \otimes [W]$

$$O_{12} = Col0([W])^T . Col0([X6]) + Col1([W])^T . Col1([X6]) + Col2([W])^T . Col2([X6])$$

$$O_{12} = (x_{12}.w_{00} + x_{22}.w_{10} + x_{32}.w_{20}) + (x_{13}.w_{01} + x_{23}.w_{11} + x_{33}.w_{21}) + (x_{14}.w_{02} + x_{24}.w_{12} + x_{34}.w_{22}).$$

La sous-matrice [X7] est composée de trois vecteurs colonnes de taille 3 notés respectivement Col0([X7]), Col1([X7]), Col2([X7]). Col0([X7])=( $x_{20}$ $x_{30}$ $x_{40}$) ; Col1([X7])=( $x_{21}$ $x_{31}$ $x_{41}$) ; Col2([X7])=( $x_{22}$ $x_{32}$ $x_{42}$).

Le résultat de sortie $O_{20}$ de la matrice de sortie [O] est obtenu par le calcul suivant : $O_{20} = [X7] \otimes [W]$

$$O_{20} = Col0([W])^T . Col0([X7]) + Col1([W])^T . Col1([X7]) + Col2([W])^T . Col2([X7]).$$

$$O_{20} = (x_{20}.W_{00} + x_{30}.W_{10} + x_{40}.W_{20}) + (x_{21}.W_{01} + x_{31}.W_{11} + x_{41}.W_{21}) + (x_{22}.W_{02} + x_{32}.W_{12} + x_{42}.W_{22}).$$

La sous-matrice [X8] est composée de trois vecteurs colonnes de taille 3 notés respectivement Col0([X8]), Col1([X8]), Col2([X8]). Col0([X8])=$( x_{21}\ x_{31}\ x_{41})$ ; Col1([X8])=$( x_{22}\ x_{32}\ x_{42})$ ; Col2([X8])=$( x_{23}\ x_{33}\ x_{43})$.
Le résultat de sortie $O_{21}$ de la matrice de sortie [O] est obtenu par le calcul suivant : $O_{21} = [X8] \otimes [W]$

$$O_{21} = Col0([W])^T . Col0([X8]) + Col1([W])^T . Col1([X8]) + Col2([W])^T . Col2([X8])$$

$$O_{21} = (x_{21}.W_{00} + x_{31}.W_{10} + x_{41}.W_{20}) + (x_{22}.W_{01} + x_{32}.W_{11} + x_{42}.W_{21}) + (x_{23}.W_{02} + x_{33}.W_{12} + x_{43}.W_{22}).$$

La sous-matrice [X9] est composée de trois vecteurs colonnes de taille 3 notés respectivement Col0([X9]), Col1([X9]), Col2([X9]). Col0([X9])=$( x_{22}\ x_{32}\ x_{42})$ ; C0l1([X9])=$( x_{23}\ x_{33}\ x_{43})$ ; Col2([X9])=$( x_{24}\ x_{34}\ x_{44})$.
Le résultat de sortie $O_{22}$ de la matrice de sortie [O] est obtenu par le calcul suivant : $O_{22} = [X9] \otimes [W]$

$$O_{22} = Col0([W])^T . Col0([X9]) + Col1([W])^T . Col1([X9]) + Col2([W])^T . Col2([X9])$$

$$O_{22} = (x_{22}.W_{00} + x_{32}.W_{10} + x_{42}.W_{20}) + (x_{23}.W_{01} + x_{33}.W_{11} + x_{43}.W_{21}) + (x_{24}.W_{02} + x_{34}.W_{12} + x_{44}.W_{22}).$$

Ainsi, plusieurs vecteurs colonnes des sous-matrices d'entrée utilisés pour le calcul de 9 coefficients $O_{ij}$ de la matrice de sortie [O] sont communs, d'où la possibilité d'optimiser l'utilisation des données d'entrée $x_{ij}$ par le réseaux d'unités de calcul pour minimiser le nombre d'opérations de lecture et écriture des données d'entrée.
La figure 7a illustre des étapes de fonctionnement d'un réseau de calcul selon un premier mode de calcul avec « un parallélisme de lignes » pour calculer une couche convolutionnelle de type 3x3s1.
Commençons d'abord par expliquer l'ordre du chargement des données de la matrice d'entrée [I] dans la mémoire tampon BUFF ,de taille réduite et intégrée dans le réseau le calcul, à partir de la mémoire externe MEM_EXT. Nous rappelons que La mémoire externe MEM_EXT (ou la mémoire interne MEM_INT) contient les matrices de données de toutes les couches du réseau de neurones en apprentissage et les matrices de données d'entrée et de sortie de la couche de neurones en cours de calcul en inférence. D'un autre côté, la mémoire tampon BUFF est une mémoire de taille réduite qui contient une partie des données utilisées en cours du calcul d'une couche de neurones.
A titre d'exemple, les données d'entrée d'une matrice d'entrée [I] dans la mémoire externe MEM_EXT sont rangées tel que tous les canaux pour un même pixel de l'image d'entrée sont disposés séquentiellement. Par exemple, si la matrice d'entrée est une image matricielle de taille NxN composée de 3 canaux d'entrée de couleurs RGB (Red, Green,Blue en anglais) les données d'entrée $x_{i,j}$ sont rangées de la manière suivante :

$x_{00R}\ x_{00G}\ x_{00B}$ , $x_{01R}\ x_{01G}\ x_{01B}$ , $x_{02R}\ x_{02G}\ x_{02B}$, ..., $x_{0(N-1)R}\ x_{0(N-1)G}\ x_{0(N-1)B}$

$x_{10R}\ x_{10G}\ x_{10B}$, $x_{11R}\ x_{11G}\ x_{11B}$, $x_{12R}\ x_{12G}\ x_{12B}$, ..., $x_{1(N-1)R}\ x_{1(N-1)G}\ x_{1(N-1)B}$

$x_{20R}\ x_{20G}\ x_{20B}$ , $x_{21R}\ x_{21G}\ x_{21B}$ , $x_{22R}\ x_{22G}\ x_{22B}$, ..., $x_{2(N-1)R}\ x_{2(N-1)G}\ x_{2(N-1)B}$

....

$x_{(N-1)0R}\ x_{(N-1)0G}\ x_{(N-1)0B}$ , $x_{(N-1)1R}\ x_{(N-1)1G}\ x_{(N-1)1B}$ , ..., $x_{(N-1)(N-1)R}\ x_{(N-1)(N-1)G}\ x_{(N-1)(N-1)B}$

Nous rappelons que dans le cas de la figure 7a nous nous limitons à un seul canal d'entrée par souci de simplification.

Lors du calcul d'une couche convolutionnelle et pour minimiser l'échange de données entre les mémoires et le réseau de calculateur, les données d'entrée sont chargées par sous-ensemble dans la mémoire tampon BUFF de taille réduite. A titre d'exemple, la mémoire tampon BUFF est organisée sur deux colonnes chacune contenant de 5 à 19 lignes avec des données codées sur 16 bits et des paquets de données codées sur 64 bits. Alternativement, il est possible d'organiser la mémoire tampon BUFF avec des données codées sur 8 bits ou 4 bits selon les spécifications et les contraintes techniques du réseau de neurone conçu. De même, le nombre de lignes de la mémoire tampon BUFF peut être adapté selon les spécifications du système.

Pour réaliser le calcul de convolution 3x3s1 avec « un parallélisme des lignes » de la matrice de sortie selon le premier mode de calcul, la lecture des données $x_{ij}$ et l'exécution des calculs sont organisées de la manière suivante :

Le groupe G1 réalise l'intégralité des calculs pour obtenir la première ligne de la matrice de sortie notée Ln0 ([O]), Le groupe G2 réalise l'intégralité des calculs pour obtenir la deuxième ligne de la matrice de sortie notée Ln1 ([O]), le groupe G3 réalise l'intégralité des calculs pour obtenir la troisième ligne de la matrice de sortie notée Ln2([O]) et ainsi de suite. Ainsi avec neuf groupes d'unités de calcul il est possible de paralléliser le calcul des neuf premières lignes de la matrice de sortie ([O]).

Lorsque le groupe G1 termine le calcul des neurones de sortie $O_{0j}$ de la première ligne Ln0([O]) , il entame les calculs des neurones pour obtenir les résultats $O_{9j}$ de la ligne de la matrice de sortie Ln9([O]) puis ceux de la ligne Ln18([O]) et ainsi de suite. Plus généralement, le groupe $G_j$ de rang j avec j=1 à M calcule les données de sortie de l'ensemble des $i^{ème}$ lignes de la matrice de sortie [O] tel que i modulo M= j-1.

Lors du démarrage du calcul d'une couche convolutionnelle, la mémoire tampon BUFF reçoit un paquet des données d'entrée $x_{ij}$ de la part de la mémoire externe MEM_EXT ou de la mémoire interne MEM_INT. La capacité de sauvegarde de la mémoire tampon permet de charger les données d'entrée de la partie composée par les sous-matrices [X1] à [X9] ayant des données communes avec la sous-matrice initiale [X1]. Cela permet de réaliser un parallélisme spatial pour calculer les 9 premières données de sortie de la matrice de sortie [O] sans charger les données à chaque fois de la mémoire globale externe MEM_EXT.

La mémoire tampon BUFF dispose de 9 ports de lecture, chaque port est connecté à un groupe $G_j$ via le registre d'entrée Reg_in de l'unité de calcul $PE_i$ appartenant au groupe. Dans le cas où il y a une pluralité de canaux de sortie, les unités de calcul $PE_i$ appartenant au même groupe $G_j$ reçoivent les mêmes données d'entrée $x_{ij}$ mais reçoivent des coefficients synaptiques différents.

Dans le mode de réalisation compatible avec le calcul avec « un parallélisme de lignes », lorsque le nombre de canaux de sortie est supérieur au nombre d'unités de calcul $PE_n$ ou quand la convolution est d'ordre supérieur à 1, chaque unité de calcul $PE_n$ comprend une pluralité d'accumulateurs $ACC_i^n$.

Entre t1 et t3, le premier groupe G1 reçoit comme entrée la première colonne de taille 3 de la sous-matrice [X1]. Le groupe G1 réalise pendant trois cycles consécutifs le calcul suivant du résultat partiel $Col0([W])^T$. $Col0([X1])$ de l'équation de calcul de $O_{0,0}$

$$O_{0,0} = \underline{Col0([W])^T . Col0([X1])} + Col1([W])^T . Col1([X1]) + Col2([W])^T . Col2([X1])$$

$$O_{0,0} = \underline{(x_{00}.w_{00} + x_{10}.w_{10} + x_{20}.w_{20})} + (x_{01}.w_{01} + x_{11}.w_{11} + x_{21}.w_{21}) + (x_{02}.w_{02} + x_{12}.w_{12} + x_{22}.w_{22}).$$

Plus précisément, l'unité de calcul $PE_0$ du groupe G1 calcule $x_{00}.w_{00}$ à t1 et stocke le résultat partiel dans un accumulateur $ACC_0^0$ A t2 la même unité de calcul $PE_0$ calcule $x_{10}.w_{10}$ et additionne le résultat à $x_{00}.w_{00}$ stocké dans l'accumulateur $ACC_0^0$. A t3 la même unité de calcul $PE_0$ calcule $x_{20}.w_{20}$ et additionne le résultat de multiplication au résultat partiel stocké dans l'accumulateur $ACC_0^0$ .

Simultanément, Entre t1 et t3, le deuxième groupe G2 reçoit comme entrée la première colonne de taille 3 de la sous-matrice [X4]. Le groupe G2 réalise pendant trois cycles consécutifs le calcul suivant du résultat partiel $Col0([W])^T$. $Col0([X4])$ de l'équation de calcul de $O_{1,0}$

$$O_{10} = \underline{Col0([W])^T . Col0([X4])} + Col1([W])^T . Col1([X4]) + Col2([W])^T . Col2([X4])$$

$$O_{10} = \underline{(x_{10}.w_{00} + x_{20}.w_{10} + x_{30}.w_{20})} + (x_{11}.w_{01} + x_{21}.w_{11} + x_{31}.w_{21}) + (x_{12}.w_{02} + x_{22}.w_{12} +$$

$$x_{32}.w_{22})$$

Plus précisément, l'unité de calcul $PE_0$ du groupe G2 calcule $x_{10}.w_{00}$ à t1 et stocke le résultat partiel dans son accumulateur $ACC_0^0$, à t2 la même unité de calcul $PE_0$ calcule $x_{20}.w_{10}$ et additionne le résultat à $x_{10}.w_{00}$ stocké dans l'accumulateur $ACC_0^0$ ; à t3 la même unité de calcul $PE_0$ calcule $x_{30}.w_{20}$ et additionne le résultat de multiplication au résultat partiel stocké dans l'accumulateur $ACC_0^0$.

Simultanément, Entre t1 et t3, le troisième groupe G3 reçoit comme entrée la première colonne de taille 3 de la sous-matrice [X7]. Le groupe G3 réalise pendant trois cycles consécutifs le calcul suivant du résultat partiel $Col0([W]^T.$ $Col0([X7])$ de l'équation de calcul de $O_{2,0}$.

$$O_{20} = \underline{Col0([W])^T . \; Col0([X7])} + Col1([W])^T . \; Col1([X7]) + Col2([W])^T . \; Col2([X7])$$

$$O_{20} = \underline{(x_{20}.w_{00} + x_{30}.w_{10} + x_{40}.w_{20})} + (x_{21}.w_{01} + x_{31}.w_{11} + x_{41}.w_{21}) + (x_{22}.w_{02} + x_{32}.w_{12} +$$

$$x_{42}.w_{22}).$$

Plus précisément, l'unité de calcul $PE_0$ du groupe G3 calcule $x_{20}.w_{00}$ à t1 et stocke le résultat partiel dans son accumulateur $ACC_0^0$, à t2 la même unité de calcul $PE_0$ calcule $x_{30}.w_{10}$ et additionne le résultat à $x_{20}.w_{00}$ stocké dans l'accumulateur $ACC_0^0$ ; à t3 la même unité de calcul $PE_0$ calcule $x_{40}.w_{20}$ et additionne le résultat de multiplication au résultat partiel stocké dans l'accumulateur $ACC_0^0$.

La colonne $Col0([X4]) = (x_{10} \; x_{20} \; x_{30})$ transmise au groupe G2 correspond à la colonne obtenue par un décalage d'une ligne supplémentaire de la colonne $Col0([X1]) = (x_{00} \; x_{10} \; x_{20})$ transférée au groupe G1. De même, la colonne $Col0([X7]) = (x_{20} \; x_{30} \; x_{40})$ transmise au groupe G3 correspond à la colonne obtenue par un décalage d'une ligne supplémentaire de la colonne $Col0([X4]) = (x_{10} \; x_{20} \; x_{30})$ transférée au groupe G2.

Plus généralement, si le premier groupe G1 reçoit la colonne de données d'entrée $(x_{i,j} \; x_{(i+1),j} \; x_{(i+2),j})$ le groupe de rang k reçoit la colonne de données d'entrée $(x_{(i+sk),j} \; x_{(i+sk+1),j} \; x_{(i+sk+2),j})$ avec s le pas de décalage de la convolution réalisée (stride).

Entre t4 et t9, le premier groupe G1 reçoit le vecteur colonne $(x_{01} \; x_{11} \; x_{21})$ correspondant à la deuxième colonne de la sous-matrice [X1] (notée $Col1([X1])$ )mais aussi à la première colonne de la sous-matrice [X2] (notée $Col0([X2])$ ). Ainsi le groupe d'unités de calcul de rang 1 G1 réalise pendant six cycles consécutifs le calcul suivant : à t4 le registre d'entrée Reg_in de l'unité de calcul $PE_0$ du groupe G1 stocke la donnée d'entrée $x_{01}$ Le multiplieur MULT calcule $x_{01}.w_{01}$ et additionne le résultat obtenu au contenu de l'accumulateur $ACC_0^0$ dédié à la donnée de sortie $O_{0,0}$. A t5, l'unité de calcul du groupe G1 conserve la donnée d'entrée $x_{01}$ dans son registre d'entrée pour calculer le résultat partiel $x_{01}.w_{00}$ qui sera stocké dans l'accumulateur $ACC_1^0$ en tant que premier terme de la somme pondérée du résultat de sortie $O_{0,1}$ A t6, la donnée d'entrée $x_{11}$ est chargée pour reprendre le calcul de $O_{0,0}$ en calculant $x_{11} \; w_{11}$ et l'additionnant avec le contenu de l'accumulateur $ACC_0^0$ puis à t7, l'unité de calcul $PE_0$ du groupe G1 garde $x_{11}$ pour calculer $x_{11} \; w_{10}$ et l'additionner au contenu de l'accumulateur $ACC_1^0$ dédié au stockage des résultats partiels du résultat de sortie $O_{0,1}$.

Simultanément, le même processus se produit avec le groupe G2 dédié au calcul de la deuxième ligne de la matrice de sortie [O]. Ainsi, entre t4 et t9, le deuxième groupe G2 reçoit le vecteur colonne $(x_{11} \; x_{21} \; x_{31})$ correspondant à la deuxième colonne de la sous-matrice [X4] (notée $Col1([X4])$ )mais aussi à la première colonne de la sous-matrice [X5] (notée $Col0([X5])$ ). Ainsi le groupe d'unités de calcul de rang 2 G2 réalise pendant six cycles consécutifs le calcul suivant : à t4 le registre d'entrée Reg_in de l'unité de calcul $PE_0$ du groupe G2 stocke la donnée d'entrée $x_{11}$. Le multiplieur MULT calcule $x_{11}.w_{01}$ et additionne le résultat obtenu au contenu de l'accumulateur $ACC_0^0$ dédié à la donnée de sortie $O_{1,0}$. A t5, l'unité de calcul du groupe G2 conserve la donnée d'entrée $x_{11}$ dans son registre d'entrée pour calculer le résultat partiel $x_{11}.w_{00}$ qui sera stocké dans l'accumulateur $ACC_1^0$ en tant que premier terme de la somme pondérée du résultat de sortie $O_{1,1}$ A t6, la donnée d'entrée $x_{21}$ est chargée pour reprendre le calcul de $O_{1,0}$ en calculant $x_{21} \; w_{11}$ et l'additionnant avec le contenu de l'accumulateur $ACC_0^0$ puis à t7, l'unité de calcul $PE_0$ du groupe G2 garde $x_{21}$ pour calculer $x_{21} \; w_{10}$ et l'additionner au contenu de l'accumulateur $ACC_1^0$ dédié au stockage des résultats partiels du résultat de sortie $O_{1,1}$..

Simultanément, le même processus se produit avec le troisième groupe G3, qui va balayer la colonne de données d'entrée $(x_{21} \; x_{31} \; x_{41})$ correspondant à la deuxième colonne de la sous-matrice [X7] (notée $Col1([X7])$ )mais aussi à la première colonne de la sous-matrice [X8] (notée $Col0([X8])$ ). Le groupe d'unités de calcul G3 de rang 3 calcule et stocke les résultats partiels de $O_{20}$ dans l'accumulateur $ACC_0^0$ et réutilise les données d'entrée communes pour le calcul des résultats partiel de $O_{21}$ stockés dans l'accumulateur $ACC_1^0$ de la même unité de calcul.

Entre t10 et t18, le premier groupe G1 reçoit le vecteur colonne ($x_{02}$ $x_{12}$ $x_{22}$) correspondant à la troisième et dernière colonne de la sous-matrice [X1] (notée Col2([X1]) )mais aussi à la deuxième colonne de la sous-matrice [X2] (notée Col1([X2])) et à la première colonne de la sous-matrice [X3] (notée Col0([X3])). Ainsi le groupe d'unités de calcul de rang 1 G1 réalise pendant 9 cycles consécutifs une partie du calcul du résultat de sortie $O_{00}$ stocké dans $ACC_0^0$, une partie du calcul du résultat de sortie $O_{01}$ stocké dans $ACC_1^0$ et une partie du calcul du résultat de sortie $O_{02}$ stocké dans $ACC_2^0$ selon le même principe de calcul décrit précédemment.

Simultanément, le même processus se produit avec le deuxième groupe G2, qui va balayer la colonne de données d'entrée ($x_{12}$ $x_{22}$ $x_{32}$) correspondant à la dernière colonne de la sous-matrice [X4] (notée Col2([X4]) )mais aussi à la deuxième colonne de la sous-matrice [X5] (notée Col1([X5])) et à la première colonne de la sous-matrice [X6] (notée Col0([X6])) . Ainsi le groupe d'unités de calcul de rang 2 G2 réalise pendant 9 cycles consécutifs le calcul du résultat de sortie $O_{10}$ stocké dans $ACC_0^0$, le calcul du résultat de sortie $O_{11}$ stocké dans $ACC_1^0$ et le calcul du résultat de sortie $O_{12}$ stocké dans $ACC_2^0$ selon le même principe de calcul décrit précédemment.

Simultanément, le même processus se produit avec le troisième groupe G3, qui va balayer la colonne de données d'entrée ($x_{22}$ $x_{32}$ $x_{42}$) correspondant à la dernière colonne de la sous-matrice [X7] (notée Col2([X7]) )mais aussi à la deuxième colonne de la sous-matrice [X8] (notée Col1([X8])) et à la première colonne de la sous-matrice [X9] (notée Col0([X9])) . Ainsi le groupe d'unités de calcul de rang 3 G3 réalise pendant 9 cycles consécutifs le calcul du résultat de sortie $O_{20}$ stocké dans $ACC_0^0$, le calcul du résultat de sortie $O_{21}$ stocké dans $ACC_1^0$ et le calcul du résultat de sortie $O_{22}$ stocké dans $ACC_2^0$ selon le même principe de calcul décrit précédemment.

Lorsque le groupe de rang 1 G1 complète le calcul du résultat de sortie $O_{00}$ à t18, il entame le calcul de $O_{03}$ à t19 tel que les résultats partiels de $O_{03}$ sont stockés dans $ACC_0^0$.

Plus généralement, dans un groupe $G_j$ de rang j=1 à M l'unité de calcul $PE_0$ calcule l'ensemble des résultats de sortie de chaque ligne de la matrice de sortie [O] de rang i tel que i modulo M=(j-1).

Plus généralement, pour réaliser une convolution de type 3x3s1 avec 9 groupes d'unité de calcul, les données d'entrée sont lues dans la mémoire tampon BUFF de la manière suivante : les colonnes lues sur chaque bus ont une taille égale à celles de la matrice de poids [W] (trois dans ce cas).

A l'établissement du régime permanent (à partir de t10) chaque neuf cycles, un décalage d'une colonne est réalisé sur un bus de données (incrémentation d'une colonne de taille 3), à chaque passage d'un bus à un autre (du BUS1 à BUS2 par exemple), un décalage d'un nombre de ligne égal au « stride » est réalisé.

Dans le cas où la matrice de sortie [O] est obtenue via plusieurs canaux d'entrée, les données d'entrée $x_{00R}$ $x_{00G}$ $x_{00B}$ correspondant au même pixel de l'image d'entrée sont lus par l'unité de calcul $PE_0$ en série avant de passer aux calculs utilisant les données d'entrée du pixel suivant de la colonne en lecture.

Dans le cas où il existe plusieurs matrices de sortie de rang q=0 à Q sur plusieurs canaux de sortie de même rangs, les unités de calcul $PE_n$ de rang n=q appartenant aux différents groupes $G_j$ réalisent l'intégralité des opérations de multiplication et d'addition pour obtenir la matrice de sortie $[O]_q$ sur le canal de sortie de rang q. A titre d'exemple, l'unité de calcul $PE_q$ de rang q du groupe G1 réalise le calcul du résultat de sortie $O_{00}$ de la matrice de sortie $[O]_q$ selon le même mode de fonctionnement décrit précédemment.

Alternativement, pour réaliser la phase d'initialisation du traitement (phase comprise entre t1 et t10 dans l'exemple décrit précédemment) le calculateur réalise la multiplication de chaque donnée d'entrée par trois poids différents pour calculer trois résultats successifs. Au début, les deux premiers résultats ne sont pas pertinents car correspondant à des points situés en dehors de la matrice de sortie et seuls les résultats pertinents sont retenus par le calculateur selon l'invention.

Le mécanisme de calcul décrit précédemment est généralisable pour tout type de convolution, en adaptant la taille des colonnes lues dans la mémoire tampon BUFF et les décalages entre les données d'entrée reçues par chaque groupe selon le pas de décalage de la convolution « stride ».

Pour conclure, le réseau d'unité de calcul MAC_RES associé à une distribution et un ordre de lecture déterminés des données d'entrée $x_{ij}$ et des coefficients synaptiques $w_{ij}$, permet de calculer tout type de couches convolutionnelles avec un parallélisme spatial pour le calcul des lignes de sortie et un parallélisme de canaux de sortie.

Dans la section suivante, nous allons décrire un mode de réalisation alternatif permettant de réaliser un parallélisme spatial total en ligne et en colonne, tel que les calculs des résultats de sortie d'une ligne de la matrice [O] sont réalisés parallèlement par plusieurs groupes d'unité de calcul $G_j$.

La figure 7b illustre des étapes de fonctionnement d'un réseau de calcul selon un second mode de calcul avec « un parallélisme spatial de lignes et de colonnes »de l'invention pour calculer une couche convolutionnelle de type 3x3s1.

Pour réaliser le calcul de convolution 3x3s1 avec un parallélisme spatial en ligne et en colonne selon le deuxième mode de réalisation, la lecture des données $x_{ij}$ et l'exécution des calculs sont organisées de la manière suivante :

Le groupe G1 réalise l'intégralité des calculs du résultat $O_{00}$, le groupe G2 réalise l'intégralité des calculs du résultat $O_{01}$, le groupe G3 réalise l'intégralité des calculs du résultat $O_{02}$.

Lorsque le groupe G1 termine le calcul du neurone de sortie $O_{00}$, il entame les calculs de la somme pondérée pour obtenir le coefficient $O_{03}$ puis $O_{06}$ et ainsi de suite. Lorsque le groupe G2 termine le calcul du neurone de sortie $O_{01}$, il entame les calculs de la somme pondérée pour obtenir le coefficient $O_{04}$ puis $O_{07}$ et ainsi de suite. Lorsque le groupe G3 termine le calcul du neurone de sortie $O_{02}$, il entame les calculs de la somme pondérée pour obtenir le coefficient $O_{05}$ puis $O_{08}$ et ainsi de suite. Ainsi le premier ensemble, noté E1, composé des groupes G1, G2, G3 calcule la ligne de rang 0 de la matrice de sortie [O]. On note ainsi E1= (G1 G2 G3).

Lorsque toutes les données de sortie de la première ligne de la matrice de sortie [O] sont calculées, le groupe G1 entame selon le même processus les calculs de la ligne de rang 3 de la matrice de sortie [O], et de toutes les lignes de rang i tel que i modulo 3=0 séquentiellement.

Le groupe G4 réalise l'intégralité des calculs du résultat $O_{10}$, le groupe G5 réalise l'intégralité des calculs du résultat $O_{11}$, le groupe G6 réalise l'intégralité des calculs du résultat $O_{12}$.

Lorsque le groupe G4 termine le calcul du neurone de sortie $O_{10}$, il entame les calculs de la somme pondérée pour obtenir le coefficient $O_{13}$ puis $O_{16}$ et ainsi de suite. Lorsque le groupe G5 termine le calcul du neurone de sortie $O_{11}$, il entame les calculs de la somme pondérée pour obtenir le coefficient $O_{14}$ puis $O_{17}$ et ainsi de suite. Lorsque le groupe G6 termine le calcul du neurone de sortie $O_{12}$, il entame les calculs de la somme pondérée pour obtenir le coefficient $O_{15}$ puis $O_{18}$ et ainsi de suite. Ainsi le second ensemble, noté E2, composé des groupes G4, G5, G6 calcule la ligne de rang 1 de la matrice de sortie [O]. On note ainsi E2= (G4 G5 G6).

Lorsque toutes les données de sortie de la ligne de rang 1 de la matrice de sortie [O] sont calculées, le groupe G4 entame selon le même processus les calculs de la ligne de rang 4 de la matrice de sortie [O], et de toutes les lignes de rang i tel que i modulo 3=1 séquentiellement.

Le groupe G7 réalise l'intégralité des calculs du résultat $O_{20}$, le groupe G8 réalise l'intégralité des calculs du résultat $O_{21}$, le groupe G9 réalise l'intégralité des calculs du résultat $O_{22}$.

Lorsque le groupe G7 termine le calcul du neurone de sortie $O_{20}$, il entame les calculs de la somme pondérée pour obtenir le coefficient $O_{23}$ puis $O_{26}$ et ainsi de suite. Lorsque le groupe G8 termine le calcul du neurone de sortie $O_{21}$, il entame les calculs de la somme pondérée pour obtenir le coefficient $O_{24}$ puis $O_{27}$ et ainsi de suite. Lorsque le groupe G9 termine le calcul du neurone de sortie $O_{22}$, il entame les calculs de la somme pondérée pour obtenir le coefficient $O_{25}$ puis $O_{23}$ et ainsi de suite. Ainsi le second ensemble, noté E3, composé des groupes G7, G8, G9 calcule la ligne de rang 2 de la matrice de sortie [O]. On note ainsi E3= (G7 G8 G9).

Lorsque toute les données de sortie de la ligne de rang 2 de la matrice de sortie [O] sont calculées, le groupe G7 entame selon le même processus les calculs de la ligne de rang 5 de la matrice de sortie [O], et de toute les lignes de rang i tel que i modulo 3=2 séquentiellement.

Lors du démarrage du calcul d'une couche convolutionnelle, la mémoire tampon BUFF reçoit un paquet des données d'entrée $x_{ij}$ de la part de la mémoire externe MEM_EXT ou la mémoire interne MEM_INT. La capacité de sauvegarde de la mémoire tampon permet de charger les coefficients de la partie composée des sous-matrices [X1] à [X9] ayant des données communes avec la sous-matrice initiale [X1]. Cela permet de réaliser un parallélisme spatial pour calculer les 9 premières données de sortie de la matrice de sortie [O] sans charger les données à chaque fois de la mémoire globale externe MEM_EXT.

La mémoire tampon BUFF dispose de trois ports de lecture, chaque port est connecté à un ensemble de groupes d'unité de calcul via un bus de données ; le premier bus BUS1 transmet les mêmes données d'entrée au premier ensemble E1= (G1 G2 G3) ; le deuxième bus BUS2 transmet les mêmes données d'entrée au deuxième ensemble E2= (G4 G5 G6) ; le troisième bus BUS3 transmet les mêmes données d'entrée au troisième ensemble E3= (G7 G8 G9).

La phase entre t1 et t6 correspond à un régime transitoire lors du démarrage, à partir de t7 tous les groupes d'unité de calcul $G_j$ réalisent des calculs de sommes pondérées de différentes données de sortie $O_{ij}$.

Entre t1 et t3, l'ensemble de groupes d'unité de calcul E1 reçoit comme entrée la première colonne de taille 3 de la sous-matrice [X1]. Le groupe G1 de l'ensemble E1 réalise pendant trois cycles consécutifs le calcul suivant du résultat partiel en gras de l'équation de calcul de $O_{0,0}$

$$O_{0,0} = \underline{Col0([W])^T . Col0([X1])} + Col1([W])^T . Col1([X1]) + Col2([W])^T . Col2([X1])$$

$$O_{0,0} = \underline{(x_{00}.w_{00} + x_{10}.w_{10} + x_{20}.w_{20})} + (x_{01}.w_{01} + x_{11}.w_{11} + x_{21}.w_{21}) + (x_{02}.w_{02} + x_{12}.w_{12} + x_{22}.w_{22}).$$

Plus précisément, l'unité de calcul $PE_0$ du groupe G1 de l'ensemble E1 calcule $x_{00}.w_{00}$ à t1 et stocke le résultat partiel dans un accumulateur $ACC_0^0$, à t2 la même unité de calcul $PE_0$ calcule $x_{10}.w_{10}$ et additionne le résultat à $x_{00}.w_{00}$ stocké dans l'accumulateur $ACC_0^0$ ; à t3 la même unité de calcul $PE_0$ calcule $x_{20}.w_{20}$ et additionne le résultat de multiplication au résultat partiel stocké dans l'accumulateur $ACC_0^0$.

Simultanément, Entre t1 et t3, l'ensemble de groupes d'unité de calcul E2 reçoit comme entrée la première colonne de taille 3 de la sous-matrice [X4]. Le groupe G4 de l'ensemble E2 réalise pendant trois cycles consécutifs le calcul suivant du résultat partiel $Col0([W])^T$. $Col0([X4])$ de l'équation de calcul de $O_{1,0}$

$$O_{10} = \underline{Col0([W])^T . Col0([X4])} + Col1([W])^T . Col1([X4]) + Col2([W])^T . Col2([X4])$$

$$O_{10} = \underline{(x_{10}.w_{00} + x_{20}.w_{10} + x_{30}.w_{20})} + (x_{11}.w_{01} + x_{21}.w_{11} + x_{31}.w_{21}) + (x_{12}.w_{02} + x_{22}.w_{12} + x_{32}.w_{22})$$

Plus précisément, l'unité de calcul $PE_0$ du groupe G4 de l'ensemble E2 calcule $x_{10}.w_{00}$ à t1 et stocke le résultat partiel dans son accumulateur $ACC_0^0$, à t2 la même unité de calcul $PE_0$ calcule $x_{20}.w_{10}$ et additionne le résultat à $x_{10}.w_{00}$ stocké dans l'accumulateur $ACC_0^0$ ; à t3 la même unité de calcul $PE_0$ calcule $x_{30}.w_{20}$ et additionne le résultat de multiplication au résultat partiel stocké dans l'accumulateur $ACC_0^0$.

Simultanément, Entre t1 et t3, l'ensemble de groupes d'unité de calcul E3 reçoit comme entrée la première colonne de taille 3 de la sous-matrice [X7]. Le groupe G7 de l'ensemble E3 réalise pendant trois cycles consécutifs le calcul suivant du résultat partiel $Col0([W]^T$. $Col0([X7]$_de l'équation de calcul de $O_{2,0}$.

$$O_{20} = \underline{Col0([W])^T . Col0([X7])} + Col1([W])^T . Col1([X7]) + Col2([W])^T . Col2([X7])$$

$$O_{20} = \underline{(x_{20}.w_{00} + x_{30}.w_{10} + x_{40}.w_{20})} + (x_{21}.w_{01} + x_{31}.w_{11} + x_{41}.w_{21}) + (x_{22}.w_{02} + x_{32}.w_{12} + x_{42}.w_{22}).$$

Plus précisément, l'unité de calcul $PE_0$ du groupe G7 de l'ensemble E3 calcule $x_{20}.w_{00}$ à t1 et stocke le résultat partiel dans son accumulateur $ACC_0^0$, à t2 la même unité de calcul $PE_0$ calcule $x_{30}.w_{10}$ et additionne le résultat à $x_{20}.w_{00}$ stocké dans l'accumulateur $ACC_0^0$ ; à t3 la même unité de calcul $PE_0$ calcule $x_{40}.w_{20}$ et additionne le résultat de multiplication au résultat partiel stocké dans l'accumulateur $ACC_0^0$.

La colonne $Col0([X4]) = (x_{10}\ x_{20}\ x_{30})$ transmise par le bus BUS2 à l'ensemble E2 correspond à la colonne obtenue par un décalage d'une ligne supplémentaire de la colonne $Col0([X1]) = (x_{00}\ x_{10}\ x_{20})$ transférée par le bus BUS1 à l'ensemble E1. De même, la colonne $Col0([X7]) = (x_{20}\ x_{30}\ x_{40})$ transmise par le bus BUS3 à l'ensemble E3 correspond à la colonne obtenue par un décalage d'une ligne supplémentaire de la colonne $Col0([X4]) = (x_{10}\ x_{20}\ x_{30})$ transférée par le bus BUS2 à l'ensemble E2.

Plus généralement, si le bus BUS1 de rang 1 transmet à l'ensemble E1 la colonne de données d'entrée $(x_{i,j}\ x_{(i+1),j}\ x_{(i+2),j})$ le bus de rang k $BUS_k$ transmet la colonne de données d'entrée $(x_{(i+sk),j}\ x_{(i+sk+1),j}\ x_{(i+sk+2),j})$ avec s le pas de décalage de la convolution réalisée (stride).

Entre t4 et t6, le premier ensemble E1 reçoit le vecteur colonne $(x_{01}\ x_{11}\ x_{21})$ correspondant à la deuxième colonne de la sous-matrice [X1] (notée $Col1([X1])$ )mais aussi à la première colonne de la sous-matrice [X2] (notée $Col0([X2])$ ). Ainsi le groupe d'unités de calcul de rang 1 G1 réalise pendant trois cycles consécutifs le calcul suivant du résultat partiel $Col1([W])^T$. $Col1([X1])$ de l'équation de calcul de $O_{0,0}$.

$$O_{0,0} = Col0([W])^T . Col0([X1]) + \underline{Col1([W])^T . Col1([X1])} + Col2([W])^T . Col2([X1])$$

$$O_{0,0} = (x_{00}.w_{00} + x_{10}.w_{10} + x_{20}.w_{20}) + \underline{(x_{01}.w_{01} + x_{11}.w_{11} + x_{21}.w_{21})} + (x_{02}.w_{02} + x_{12}.w_{12} + x_{22}.w_{22}).$$

Simultanément, le groupe d'unités de calcul de rang 2 G2 recevant la même colonne de données d'entrée réalise pendant trois cycles consécutifs le calcul du résultat partiel $Col0([W])^T$. $Col0([X2])$ de l'équation de calcul de $O_{0,1}$ :

$$O_{0,1} = \underline{Col0([W])^T . Col0([X2])} + Col1([W])^T . Col1([X2]) + Col2([W])^T . Col2([X2])$$

$$O_{0,1} = \underline{(x_{01}.w_{00} + x_{11}.w_{10} + x_{21}.w_{20})} + (x_{02}.w_{01} + x_{12}.w_{11} + x_{22}.w_{21}) + (x_{03}.w_{02} + x_{13}.w_{12} + x_{23}.w_{22})$$

Simultanément, le même processus se produit avec le deuxième ensemble E2, qui va balayer la colonne de données d'entrée $(x_{11} \ x_{21} \ x_{31})$ correspondant à la deuxième colonne de la sous-matrice [X4] (notée Col1([X4]) )mais aussi à la première colonne de la sous-matrice [X5] (notée Col0([X5]) ). Le groupe d'unités de calcul G4 de rang 4 réalise le calcul du terme Col1([W])$^T$ . Col1([X4]) de $O_{10}$ et le groupe d'unités de calcul G5 de rang 5 réalise le calcul du terme Col0([W])$^T$. Col0([X5]) de $O_{11}$.

Simultanément, le même processus se produit avec le troisième ensemble E3, qui va balayer la colonne de données d'entrée $(x_{21} \ x_{31} \ x_{41})$ correspondant à la deuxième colonne de la sous-matrice [X7] (notée Col1([X7]) )mais aussi à la première colonne de la sous-matrice [X8] (notée Col0([X8]) ). Le groupe d'unités de calcul G7 de rang 7 réalise le calcul du terme Col1([W])$^T$ . Col1([X7]) de $O_{20}$ et le groupe d'unités de calcul G8 de rang 8 réalise le calcul du terme Col0([W])$^T$. Col0([X8]) de $O_{21}$.

Entre t7 et t9, le premier ensemble E1 reçoit le vecteur colonne $(x_{02} \ x_{12} \ x_{22})$ correspondant à la troisième et dernière colonne de la sous-matrice [X1] (notée Col2([X1]) )mais aussi à la deuxième colonne de la sous-matrice [X2] (notée Col1([X2])) et à la première colonne de la sous-matrice [X3] (notée Col0([X3])). Ainsi le groupe d'unités de calcul de rang 1 G1 réalise pendant trois cycles consécutifs le calcul du dernier résultat partiel Col2([W])$^T$. Col2([X1]) de l'équation de calcul de $O_{0,0}$.

$$O_{0,0} = Col0([W])^T . Col0([X1]) + Col1([W])^T . Col1([X1]) \underline{+ Col2([W])^T . Col2([X1])}$$

$$O_{0,0} = (x_{00}.w_{00} + x_{10}.w_{10} + x_{20}.w_{20}) + (x_{01}.w_{01} + x_{11}.w_{11} + x_{21}.w_{21}) + \underline{(x_{02}.w_{02} + x_{12}.w_{12} + x_{22}.w_{22})}.$$

Simultanément, le groupe d'unités de calcul de rang 2 G2 recevant la même colonne de données d'entrée réalise pendant trois cycles consécutifs le calcul du résultat partiel Col1([W])$^T$ . Col1([X2]) de l'équation de calcul de $O_{0,1}$ :

$$O_{0,1} = Col0([W])^T . Col0([X2]) + \underline{Col1([W])^T . Col1([X2])} + Col2([W])^T . Col2([X2])$$

$$O_{0,1} = (x_{01}.w_{00} + x_{11}.w_{10} + x_{21}.w_{20}) + \underline{(x_{02}.w_{01} + x_{12}.w_{11} + x_{22}.w_{21})} + (x_{03}.w_{02} + x_{13}.w_{12} + x_{23}.w_{22}).$$

Simultanément, le groupe d'unités de calcul de rang 3 G3 recevant la même colonne de données d'entrée réalise pendant trois cycles consécutifs le calcul du premier résultat partiel de l'équation de calcul de $O_{0,2}$ égal Col0([W])$^T$. Col0([X3]).

Simultanément, le même processus se produit avec le deuxième ensemble E2, qui va balayer la colonne de données d'entrée $(x_{12} \ x_{22} \ x_{32})$ correspondant à la dernière colonne de la sous-matrice [X4] (notée Col2([X4]) )mais aussi à la deuxième colonne de la sous-matrice [X5] (notée Col1([X5])) et à la première colonne de la sous-matrice [X6] (notée Col0([X6])) . Le groupe d'unités de calcul G4 de rang 4 réalise le calcul du terme Col2([W])$^T$. Col2([X4]) de $O_{10}$, le groupe d'unités de calcul G5 de rang 5 réalise le calcul du terme Col1([W])$^T$. Col1([X5]) de $O_{11}$ et le groupe d'unités de calcul G6 de rang 6 réalise le calcul du terme Col0([W])$^T$. Col0([X6]) de $O_{12}$.

Simultanément, le même processus se produit avec le troisième ensemble E3, qui va balayer la colonne de données d'entrée $(x_{22} \ x_{32} \ x_{42})$ correspondant à la dernière colonne de la sous-matrice [X7] (notée Col2([X7]) )mais aussi à la deuxième colonne de la sous-matrice [X8] (notée Col1([X8])) et à la première colonne de la sous-matrice [X9] (notée Col0([X9])) . Le groupe d'unités de calcul G7 de rang 7 réalise le calcul du terme final Col2([W])$^T$ . Col2([X7]) de $O_{20}$, le groupe d'unités de calcul G9 de rang 9 réalise le calcul du terme Col1([W])$^T$ . Col1([X9]) de $O_{21}$ et le groupe d'unités de calcul G9 de rang 9 réalise le calcul du terme Col0([W])$^T$. Col0([X6]) de $O_{22}$.

Ainsi le réseau de calcul MAC_RES est rentré en régime permanent de calcul où tous les groupes réalisent des calculs en parallèle de différents neurones de la matrice de sortie [O].

Plus généralement, pour réaliser une convolution de type 3x3s1 avec 3X3 groupes d'unité de calcul (3 ensembles E contenant chacun 3 groupes G), les données d'entrée sont lus dans la mémoire tampon BUFF de la manière suivante : les colonnes lus sur chaque bus ont une taille égale à celles de la matrice de poids [W] (trois dans ce cas), chaque trois cycle, un décalage d'une colonne est réalisé sur un bus de données (incrémentation d'une colonne de taille 3), à chaque passage d'un bus à un autre (du BUS1 à BUS2 par exemple), un décalage d'un nombre de ligne égale au « stride » est réalisé.

A partir de t10, le groupe d'unités de calcul G1 entame les calculs de $O_{03}$ en utilisant successivement les colonnes $(x_{03}\ x_{13}\ x_{23})$, $(x_{04}\ x_{14}\ x_{24})$, $(x_{05}\ x_{15}\ x_{25})$. A partir de t19, le groupe d'unités de calcul G1 entame les calculs de $O_{06}$ en utilisant successivement les colonnes $(x_{06}\ x_{16}\ x_{26})$, $(x_{07}\ x_{17}\ x_{27})$, $(x_{08}\ x_{18}\ x_{28})$ et ainsi de suite.

Dans le cas où la matrice de sortie [O] est obtenue via plusieurs canaux d'entrée, les données d'entrée $x_{00R}$ $x_{00G}$ $x_{00B}$ correspondant au même pixel de l'image d'entrée sont lus par l'unité de calcul $PE_0$ en série avant de passer aux calculs utilisant les données d'entrée du pixel suivant de la colonne en lecture.

Dans le cas où il existe plusieurs matrices de sortie de rang q=0 à Q sur plusieurs canaux de sortie de même rangs, les unités de calcul $PE_n$ de rang n=q appartenant aux différents groupes $G_j$ réalisent l'intégralité des opérations de multiplication et d'addition pour obtenir la matrice de sortie $[O]_q$ sur le canal de sortie de rang q. A titre d'exemple, l'unité de calcul $PE_q$ de rang q du groupe G1 réalise le calcul du résultat de sortie $O_{00}$ de la matrice de sortie $[O]_q$ selon le même mode de fonctionnement décrit précédemment.

Les figures 8a à 8e représentent des opérations de convolution réalisables avec un parallélisme spatial en lignes et en colonnes par le réseau de calcul selon un mode de réalisation pour obtenir une partie de la matrice de sortie [O] sur un canal de sortie à partir d'une matrice d'entrée sur un canal d'entrée lors d'une convolution 5x5s2.

Nous nous limitons à représenter dans les figures 8a à 8e la partie d'une matrice d'entrée [I] composée des sous-matrices (ou « champ récepteur du neurone ») ayant un chevauchement avec la sous-matrice [X1]. Cela se traduit par l'utilisation d'au moins une donnée d'entrée $x_{i,j}$ commune avec la sous-matrice [X1] .Ainsi, il est possible de réaliser des calculs utilisant ces données d'entrée communes par différents groupes d'unités de calcul $G_j$ composé dans cet exemple illustratif par une seule unités de calcul $PE_0$.

La partie obtenue de la matrice d'entrée [I] pouvant être utilisée avec un parallélisme spatial pour réaliser une convolution 5x5s2 est une matrice de taille 9x9 composé de 9 « champ récepteur du neurone » donnant par convolution avec la matrice de poids [W] neuf résultats de sortie $O_{00}$ à $O_{88}$. Il est possible alors de calculer une couche de convolution de type 5x5s2 avec un réseau de calcul composé de 3x3 groupes d'unités de calcul $G_j$.

La figure 9 illustre des étapes de fonctionnement d'un réseau de calcul selon le second mode de calcul avec « un parallélisme spatial de lignes et de colonnes »de l'invention pour calculer une couche convolutionnelle de type 5x5s2. Cependant, ce type de convolution nécessite plus de cycles de calcul (2x5 cycles de calcul) pour balayer deux colonnes successives d'une sous-matrice d'entrée en cours de calcul.

Concernant le calcul d'une couche de convolution de type 5x5s1, le nombre de résultats de sortie $O_{ij}$ pouvant être calculés via un parallélisme spatial en lignes et en colonnes est 25, ce qui est supérieur à 9. Ainsi, le calculateur selon le mode de réalisation décrit (3 ensembles contenant 3 groupes d'unité de calcul) permet de réaliser le calcul de ce type de convolution mais avec quatre passes de lecture des données d'entrée.

D'autres techniques de programmation de calcul sont envisageables par le concepteur pour adapter le mode de réalisation choisi (définissant le nombre d'ensembles et le nombre de groupes) au type de convolution réalisé.

Avantageusement, pour réaliser un parallélisme spatial en lignes et en colonnes, le calcul d'une couche de convolution de type 5x5s1 est réalisable par un réseau de calcul MAC_RES composé de 5 ensembles de calcul E1 à E5 tel que chaque ensemble comprend lui-même 5 groupes d'unité de calcul $G_j$, chaque groupe d'unités de calcul $G_j$ comprenant Q unité de calcul $PE_i$. Cette variante de l'invention permet un fonctionnement optimisé avec la convolution 5x5s1.

La figure 10a représente des opérations de convolution réalisables avec un parallélisme spatial par le réseau de calcul selon un mode de réalisation pour obtenir une partie de la matrice de sortie [O] sur un canal de sortie à partir d'une matrice d'entrée sur un canal d'entrée lors d'une convolution 3x3s2. Les sous-matrices d'entrée ayant des données d'entrée communes avec une sous-matrice [X1] sont les sous-matrices [X2], [X3] et [X4]. Ainsi, il est possible de calculer quatre résultats de sortie $O_{ij}$ avec un parallélisme spatial de calcul réalisé par quatre groupes d'unités de calcul $G_j$. Le mode de réalisation de la figure 4 comprend 9 groupes d'unités de calcul $G_j$ pouvant ainsi calculer une couche convolutionnelle de type 3x3s2.

Avantageusement, pour réaliser un parallélisme spatial en lignes et en colonnes d'une convolution de type 3x3s2 tout en minimisant le temps de calcul du circuit, il est possible d'utiliser 8 groupes d'unités de calcul permettant de calculer 8 résultats de sortie $O_{ij}$ avec un parallélisme spatial et non seulement quatre.

Avantageusement, pour réaliser un parallélisme spatial en lignes et en colonnes d'une convolution de type 3x3s2 tout en minimisant la surface et la complexité du circuit, le calcul d'une couche de convolution de type 3x3s2 est réalisable par un réseau de calcul MAC_RES composé de 2 ensembles de calcul E1 à E2 tel que chaque ensemble comprend lui-même 2 groupes d'unité de calcul $G_j$, chaque groupe d'unités de calcul $G_j$ comprenant Q unités de calcul $PE_i$. Cette variante de l'invention permet un fonctionnement optimisé avec la convolution 3x3s2.

La figure 10b représente des opérations de convolution réalisables avec un parallélisme spatial par le réseau de calcul selon un mode de réalisation pour obtenir une partie de la matrice de sortie [O] sur un canal de sortie à partir d'une matrice d'entrée sur un canal d'entrée lors d'une convolution 7x7s2. Les sous-matrices d'entrée ayant des données d'entrée communes avec une sous-matrice [X1] sont les sous-matrices [X2], [X3], [X4], [X5], [X6], [X7], [X8], [X9], [X10], [X11] , [X12], [X13], [X14], [X15] et [X16]. Ainsi, il est possible de calculer 16 résultats de sortie $O_{ij}$ avec un parallélisme spatial de calcul réalisé par seize groupes d'unités de calcul $G_j$. Le mode de réalisation de la figure 4 comprend 9 groupes d'unités de calcul $G_j$ pouvant ainsi calculer une couche convolutionnelle de type 7x7s2 mais avec quatre passes de lecture de données d'entrée.

Avantageusement, pour réaliser un parallélisme spatial en lignes et en colonnes, le calcul d'une couche de convolution de type 7x7s2 est réalisable par un réseau de calcul MAC_RES composé de 4 ensembles de calcul E1 à E4 tel que chaque ensemble comprend lui-même 4 groupes d'unité de calcul $G_j$, chaque groupe d'unités de calcul $G_j$ comprenant Q unité de calcul $PE_i$. Cette variante de l'invention permet un fonctionnement optimisé avec la convolution 7x7s2.

La figure 10c représente des opérations de convolution réalisables avec un parallélisme spatial par le réseau de calcul selon un mode de réalisation pour obtenir une partie de la matrice de sortie [O] sur un canal de sortie à partir d'une matrice d'entrée sur un canal d'entrée lors d'une convolution 7x7s4. Les sous-matrices d'entrée ayant des données d'entrée communes avec une sous-matrice [X1] sont les sous-matrices [X2], [X3] et [X4]. Ainsi, il est possible de calculer quatre résultats de sortie $O_{ij}$ avec un parallélisme spatial de calcul réalisé par quatre groupes d'unités de calcul $G_j$. Le mode de réalisation de la figure 4 comprend 9 groupes d'unités de calcul $G_j$ pouvant ainsi calculer une couche convolutionnelle de type 7x7s4.

Alternativement, pour réaliser un parallélisme spatial en lignes et en colonnes d'une convolution de type 7x7s4 tout en minimisant la surface et la complexité du circuit, le calcul d'une couche de convolution de type 7x7s4 est réalisable par un réseau de calcul MAC_RES composé de 2 ensembles de calcul E1 à E2 tel que chaque ensemble comprend lui-même 2 groupes d'unité de calcul $G_j$, chaque groupe d'unités de calcul $G_j$ comprenant Q unité de calcul $PE_i$. Cette variante de l'invention permet un fonctionnement optimisé avec la convolution 7x7s4.

La figure 10d représente des opérations de convolution réalisables avec un parallélisme spatial par le réseau de calcul selon un mode de réalisation pour obtenir une partie de la matrice de sortie [O] sur un canal de sortie à partir d'une matrice d'entrée sur un canal d'entrée lors d'une convolution 11x11s4. Les sous-matrices d'entrée ayant des données d'entrée communes avec une sous-matrice [X1] sont les sous-matrices [X2], [X3], [X3], [X4], [X5], [X6], [X7], [X8] et [X9]. Ainsi, il est possible de calculer 9 résultats de sortie $O_{ij}$ avec un parallélisme spatial de calcul réalisé par neuf groupes d'unités de calcul $G_j$. Le mode de réalisation de la figure 4 comprend 9 groupes d'unités de calcul $G_j$ pouvant ainsi calculer une couche convolutionnelle de type 11x11s4.

Pour conclure, l'architecture du réseau de calcul MAC_RES selon l'invention ayant 3x3 groupes d'unités de calcul $G_j$, permet de réaliser plusieurs types de convolutions à savoir 3x3s2, 3x3s1, 5x5s2, 7x7s2, 7x7s4, 11x11s4 mais aussi 1x1s1 pour un mode de calcul avec « parallélisme spatial en lignes et en colonnes ». Alternativement, l'architecture permet de réaliser tous types de convolutions pour un mode de calcul avec « un parallélisme uniquement en lignes ». De plus, chaque groupe $G_j$ comprend 128 unités de calcul $PE_i$ permettant de calculer 128 matrices de sortie $[O]_q$ sur 128 canaux de sortie réalisant ainsi un parallélisme de calcul de canaux de sortie. Dans le cas où le nombre de canaux de sortie est supérieur au nombre d'unités de calcul $PE_i$ par groupe $G_j$, le calculateur permet de réaliser les calculs des différents canaux de sortie en utilisant la pluralité d'accumulateurs $ACC_i$ de chaque unité de calcul $PE_i$

Le circuit de calcul d'un réseau de neurone convolutionnel CALC selon les modes de réalisation de l'invention peut être utilisé dans de nombreux domaines d'application, notamment dans des applications où une classification de données est utilisée. Les domaines d'application du circuit de calcul d'un réseau de neurone convolutionnel CALC selon les modes de réalisation de l'invention comprennent par exemple des applications de surveillance vidéo avec une reconnaissance en temps réel de personne, des applications interactives de classification mises en œuvre dans des téléphones intelligents (« smartphones ») pour des applications interactives de classification, des applications de fusion de données dans des systèmes de surveillance de domicile etc.

Le circuit de calcul d'un réseau de neurone convolutionnel CALC selon l'invention peut être implémenté à l'aide de composants matériels et/ou logiciels. Les éléments logiciels peuvent être disponibles en tant que produit programme d'ordinateur sur un support lisible par ordinateur, support qui peut être électronique, magnétique, optique ou électromagnétique. Les éléments matériels peuvent être disponibles tous ou en partie, notamment en tant que circuits intégrés dédiés (ASIC) et/ou circuits intégrés configurables (FPGA) et/ou en tant que circuits neuronaux selon l'invention ou en tant que processeur de signal numérique DSP et/ou en tant que processeur graphique GPU, et/ou en tant que microcontrôleur et/ou en tant que processeur général par exemple. Le circuit de calcul d'un réseau de neurone convolutionnel CALC comprend également une ou plusieurs mémoires qui peuvent être des registres, registres à décalage, mémoire RAM, mémoire ROM ou tout autre type de mémoire adapté à la mise en œuvre de l'invention.

**Revendications**

1. Circuit de calcul (CALC) pour calculer des données de sortie ($O_{i,j}$) d'une couche d'un réseau de neurones artificiels à partir de données d'entrée ($x_{i,j}$), le réseau de neurones étant composé d'une succession de couches étant chacune constituée d'un ensemble de neurones , chaque couche étant connectée à une couche adjacente via une pluralité de synapses associées à un ensemble de coefficients synaptiques ($w_{i,j}$) formant au moins une matrice de poids ($[W]_{p,q}$) ;
le circuit de calcul (CALC) comprenant :

   - une mémoire externe (MEM_EXT) pour stocker toutes les données d'entrée et de sortie de tous les neurones d'au moins la couche du réseau en cours de calcul ;
   - un système intégré sur puce (SoC) comprenant :

      i. un réseau de calcul (MAC_RES) comprenant au moins un ensemble (E1,E2,E3) d'au moins un groupe d'unités de calcul ($G_j$) de rang j=0 à M avec M un entier positif ; chaque groupe ($G_j$) comprenant au moins une unité de calcul ($PE_n$) de rang n=0 à N avec N un entier positif pour calculer une somme de données d'entrée pondérées par des coefficients synaptiques ;
      le réseau de calcul (MAC_RES) comprenant en outre une mémoire tampon (BUFF) pour stocker une sous-matrice des données d'entrée provenant de la mémoire (MEM_EXT) ; la mémoire tampon (BUFF) étant connectée aux unités de calcul ($PE_n$) ;
      ii. un étage mémoire de poids (MEM_POIDS) comprenant une pluralité de mémoires (MEM_POIDS$_n$) de rang n=0 à N pour stocker les coefficients synaptiques des matrices de poids ($[W]_{p,q}$) ; chaque mémoire (MEM_POIDS$_n$) de rang n=0 à N étant connectée à toutes les unités de calcul ($PE_n$) de même rang n de chacun les groupes ($G_j$) ;
      iii. des moyens de contrôle (ADD_GEN, ADD_GEN2) configurés pour distribuer les données d'entrée ($x_{i,j}$) de la mémoire tampon (BUFF) vers lesdits ensembles (E1 ,E2,E3) de manière à ce que chaque ensemble (E1,E2, E3) de groupes d'unités de calcul reçoive un vecteur colonne de la sous matrice stockée dans la mémoire tampon (BUFF) incrémenté d'une colonne par rapport au vecteur colonne reçu précédent ; tous les ensembles (E1,E2,E3) reçoivent simultanément des vecteurs colonnes décalés entre eux d'un nombre de lignes égal à un paramètre de décalage de l'opération de convolution ;

   les données de sortie ($O_{ij}$) d'une couche sont organisées en une pluralité de matrices de sortie ($[O]_q$ ) de rang q=0 à Q avec Q un entier positif, chaque matrice de sortie étant associée à un canal de sortie de même rang q ; chaque coefficient synaptique de la matrice de poids ($[W]_{p,q}$) associée audit canal de sortie est stocké uniquement dans la mémoire de poids (MEM_POIDS$_n$) de rang n=0 à N+1 tel que q modulo N+1 est égal à n.

2. Circuit de calcul (CALC) selon la revendication 1 dans lequel les moyens de contrôles (ADD_GEN, ADD_GEN1) sont en outre configurés pour organiser la lecture des coefficients synaptiques ($w_{i,j}$) des mémoires de poids (MEM_POIDS$_n$) vers lesdits ensembles (E1,E2,E3) .

3. Circuit de calcul (CALC) selon l'une quelconque des revendications 1 ou 2 dans lequel les moyens de contrôle sont implémentés par un ensemble de générateurs d'adresses (ADD_GEN, ADD_GEN1, ADD_GEN2).

4. Circuit de calcul (CALC) selon l'une quelconque des revendications précédentes dans lequel le système intégré sur puce (SoC) comprend une mémoire interne (MEM_INT) pour servir d'extension à la mémoire volatile externe (MEM_EXT) ; la mémoire interne (MEM_INT) étant connectée pour écrire dans la mémoire tampon (BUFF).

5. Circuit de calcul (CALC) selon l'une quelconque des revendications précédentes dans lequel :

   - les moyens de contrôle (ADD_GEN) sont configurés pour organiser les données de sorties ($O_{i,j}$) dans la mémoire tampon (BUFF) de manière à ce que les données de sortie ($O_{ij}$) d'une couche sont organisées en une pluralité de matrices de sortie ($[O]_q$) de rang q=0 à Q avec Q un entier positif, chaque matrice de sortie étant obtenue à partir d' au moins une matrice d' entrée ($[I]_p$) de rang p=0 à P avec P un entier positif,
   - les moyens de contrôle (ADD_GEN2) sont configurés pour organiser les coefficients synaptiques ($w_{i,j}$) dans l' étage mémoire de poids (MEM_POIDS) de manière que pour chaque couple de matrice d'entrée de rang p et matrice de sortie de rang q, les coefficients synaptiques ($w_{i,j}$) associés forment une matrice de poids ($[W]_{p,q}{}^k$),
   - chaque unité de calcul ($PE_n$) est apte à générer une donnée de sortie ($O_{i,j}$) de la matrice de sortie ($[O]_q$), en réalisant le calcul de la somme des données d' entrée d'une sous-matrice ([X1], [X2], [X3], [X4], [X5], [X6], [X7], [X8], [X9]) de la matrice d'entrée ($[I]_p$) pondérée par les coefficients synaptiques associés,
- les moyens de contrôle (ADD_GEN, ADD_GEN2) sont configurés pour organiser les données de sorties ($O_{i,j}$) dans la mémoire tampon (BUFF ) de manière à ce que les sous-matrices d'entrée ([X1], [X2], [X3], [X4], [X5], [X6], [X7], [X8], [X9]) ayant les mêmes dimensions que la matrice de poids ($[W]_{p,q}^k$) et de manière à ce que chaque sous-matrice d'entrée est obtenue par la réalisation d'un décalage égal au paramètre de décalage de l'opération de convolution réalisée selon la direction des lignes ou des colonnes à partir d'une sous-matrice d'entrée adjacente.

6. Circuit de calcul (CALC) selon l'une quelconque des revendications précédentes dans lequel chaque unité de calcul comprend :

i. un registre d'entrée ($Reg\_in_0$, $Reg\_in_1$, $Reg\_in_2$, $Reg\_in_3$) pour stocker une donnée d'entrée ($x_{i,j}$) ;
ii. un circuit multiplieur (MULT) pour calculer le produit d'une donnée d'entrée ($x_{i,j}$) et d'un coefficient synaptique ($w_{i,j}$) ;
iii. un circuit additionneur ($ADD_0$, $ADD_1$, $ADD_2$, $ADD_3$) ayant une première entrée connectée à la sortie du circuit multiplieur ($MULT_0$, $MULT_1$, $MULT_2$, $MULT_3$) et étant configuré pour réaliser les opérations de sommation de résultats de calcul partiels d'une somme pondérée ;
iv. au moins un accumulateur ($ACC_0^0$, $ACC_1^0$, $ACC_2^0$) pour stocker des résultats de calcul partiels ou finaux de la somme pondérée.

7. Circuit de calcul (CALC) selon l'une quelconque des revendications précédentes dans lequel chaque mémoire de poids (MEM_POIDS0, MEM_POIDS1, MEM_POIDS2, MEM_POIDS3) de rang n=0 à N contient l'intégralité des coefficients synaptiques ($w_{i,j}$) appartenant à toutes les matrices de poids ($[W]_{p,q}$) associées à la matrice de sortie ($[O]_q$) de rang q=0 à Q tel que q modulo N+1 est égal à n.

8. Circuit de calcul (CALC) selon l'une quelconque des revendications précédentes réalisant un parallélisme de calcul de canaux de sortie tel que les unités de calcul ($PE_n$) de rang n=0 à N des différents groupes d'unités de calcul ($G_j$) réalisent les opérations de multiplication et d'addition pour calculer une matrice de sortie ($[O]_q$) de rang q=0 à Q tel que q modulo N+1 est égal à n.

9. Circuit de calcul (CALC) selon l'une quelconque des revendications précédentes dans lequel chaque ensemble (E1,E2,E3) comprend un seul groupe d'unités de calcul ($G_j$), chaque unité de calcul (PE) comprenant une pluralité d'accumulateurs ($ACC_0^0$, $ACC_1^0$, $ACC_2^0$) ; chaque ensemble (E1,E2,E3) de rang k avec k=1 à K avec K un entier strictement positif, est configuré pour réaliser successivement, pour une donnée d'entrée ($x_{i,j}$) reçue, les opérations d'addition et de multiplication pour calculer des résultats partiels de sortie ($O_{i,j}$) appartenant à une ligne de rang i=0 à L, avec L un entier positif, de la matrice de sortie ($[O]_q$) à partir de ladite donnée d'entrée ($x_{i,j}$) tel que i modulo K est égal à (k-1).

10. Circuit de calcul (CALC) selon la revendication 9 dans lequel les résultats partiels de chacun des résultats de sortie ($O_{i,j}$) de la ligne de la matrice de sortie calculée par une unité de calcul ($PE_n$) sont stockés dans un accumulateur distinct appartenant à la même unité de calcul ($PE_n$).

11. Circuit de calcul (CALC) selon l'une quelconque des revendications 1 à 8 dans lequel chaque ensemble (E1, E2, E3) comprend une pluralité de groupes d'unités de calcul ($G_j$) réalisant un parallélisme spatial de calcul de la matrice de sortie ($[O]_q$) tel que chaque ensemble (E1,E2,E3) de rang k avec k=1 à K réalise parallèlement les opérations d'addition et de multiplication pour calculer des résultats partiels de sortie ($O_{i,j}$) appartenant à une ligne de rang i de la matrice de sortie ($[O]_q$) tel que i modulo K est égal à (k-1) et tel que chaque groupe ($G_j$) de rang j=0 à M dudit ensemble (E1, E2, E3) réalise les opérations d'addition et de multiplication pour calculer des résultats partiels de sortie ($O_{i,j}$) appartenant à une colonne de rang I de la matrice de sortie ($[O]_q$) tel que I modulo M+1 est égal à j.

12. Circuit de calcul (CALC) selon la revendication 11 comprenant trois ensembles (E1, E2, E3), chaque ensemble comprenant trois groupes d'unités de calcul (G1, G2, G3).

13. Circuit de calcul (CALC) selon l'une quelconque des revendications précédentes dans lequel les mémoires de poids ($MEM\_POIDS_n$) sont de type NVM.

FIG.1

FIG.2a

EP 3 955 170 A1

FIG.2b

EP 3 955 170 A1

FIG.2c

EP 3 955 170 A1

FIG.2d

FIG.3

FIG.4

**FIG.5**

FIG.6a

FIG.6b

FIG.6c

FIG.7a

FIG.7b

FIG.8a

FIG.8b

FIG.8c

[X3]

FIG.8d

FIG.8e

EP 3 955 170 A1

FIG.9

FIG.10a

7x7s2

| | |
|---|---|
| ———————— [X1] | ———————— [X9] |
| — — — — [X2] | — — — — [X10] |
| —··—··— [X3] | —··—··— [X11] |
| —·—·—· [X4] | —·—·—· [X12] |
| | |
| ———————— [X5] | ———————— [X13] |
| — — — [X6] | — — — [X14] |
| —··—··— [X7] | —··—··— [X15] |
| —·—·—· [X8] | —·—·—· [X16] |

FIG.10b

EP 3 955 170 A1

EP 3 955 170 A1

7x7s4

FIG.10c

45

11x1s4

[X1]
[X2]
[X3]
[X4]
[X5]
[X6]
[X7]
[X8]
[X9]

FIG.10d

Europäisches
Patentamt

European
Patent Office

Office européen
des brevets

**RAPPORT DE RECHERCHE EUROPEENNE**

Numéro de la demande

**EP 21 18 8496**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2016/379109 A1 (MICROSOFT TECHNOLOGY LICENSING LLC [US]) 29 décembre 2016 (2016-12-29) * figures 42-51 * * alinéas [0257] - [0303] * ----- | 1-13 | INV. G06N3/063 G06N3/04 |
| X | US 2019/026237 A1 (TESLA INC [US]) 24 janvier 2019 (2019-01-24) * alinéas [0028] - [0042]; figure 1 * * alinéa [0052]; figure 3 * * alinéas [0059] - [0061]; figure 4 * * alinéa [0074]; figure 5 * * alinéas [0084] - [0097]; figure 6 * * alinéas [0104] - [0111] * ----- | 1-13 | |
| X | EP 3 674 982 A1 (IMEC VZW [BE]) 1 juillet 2020 (2020-07-01) * figures 2-4 * * alinéas [0055] - [0071] * ----- | 1-13 | |
| A | US 2018/300615 A1 (MICROSOFT TECHNOLOGY LICENSING LLC [US]) 18 octobre 2018 (2018-10-18) * figures 1-3 * * alinéas [0033] - [0069] * ----- | 1-13 | DOMAINES TECHNIQUES RECHERCHES (IPC) G06N |
| A | US 2017/103316 A1 (GOOGLE INC [US]) 13 avril 2017 (2017-04-13) * alinéa [0047]; figure 5 * ----- | 1-13 | |

Le présent rapport a été établi pour toutes les revendications

| Lieu de la recherche | Date d'achèvement de la recherche | Examinateur |
|---|---|---|
| La Haye | 17 décembre 2021 | Millet, Guillaume |

**EP 3 955 170 A1**

## ANNEXE AU RAPPORT DE RECHERCHE EUROPEENNE
## RELATIF A LA DEMANDE DE BREVET EUROPEEN NO.

EP 21 18 8496

17-12-2021

| Document brevet cité au rapport de recherche | Date de publication | Membre(s) de la famille de brevet(s) | Date de publication |
|---|---|---|---|
| US 2016379109 A1 | 29-12-2016 | CN 107836001 A | 23-03-2018 |
| | | EP 3314542 A1 | 02-05-2018 |
| | | US 2016379109 A1 | 29-12-2016 |
| | | US 2019311253 A1 | 10-10-2019 |
| | | WO 2017003887 A1 | 05-01-2017 |
| US 2019026237 A1 | 24-01-2019 | AUCUN | |
| EP 3674982 A1 | 01-07-2020 | AUCUN | |
| US 2018300615 A1 | 18-10-2018 | AU 2018256212 A1 | 19-09-2019 |
| | | BR 112019021541 A2 | 12-05-2020 |
| | | CA 3056660 A1 | 25-10-2018 |
| | | CL 2019002864 A1 | 06-03-2020 |
| | | CN 110506260 A | 26-11-2019 |
| | | CN 110520846 A | 29-11-2019 |
| | | CN 110520853 A | 29-11-2019 |
| | | CN 110520856 A | 29-11-2019 |
| | | CN 110520857 A | 29-11-2019 |
| | | CN 110520870 A | 29-11-2019 |
| | | CN 110520909 A | 29-11-2019 |
| | | CN 110537194 A | 03-12-2019 |
| | | CN 110546610 A | 06-12-2019 |
| | | CN 110546611 A | 06-12-2019 |
| | | CN 110546628 A | 06-12-2019 |
| | | CN 110546654 A | 06-12-2019 |
| | | CN 110582785 A | 17-12-2019 |
| | | CN 110678843 A | 10-01-2020 |
| | | CO 2019011014 A2 | 21-10-2019 |
| | | EP 3612933 A1 | 26-02-2020 |
| | | EP 3612934 A1 | 26-02-2020 |
| | | EP 3612936 A1 | 26-02-2020 |
| | | EP 3612937 A1 | 26-02-2020 |
| | | EP 3612942 A1 | 26-02-2020 |
| | | EP 3612945 A1 | 26-02-2020 |
| | | EP 3612946 A1 | 26-02-2020 |
| | | EP 3612947 A1 | 26-02-2020 |
| | | EP 3612948 A1 | 26-02-2020 |
| | | EP 3612988 A2 | 26-02-2020 |
| | | EP 3612989 A1 | 26-02-2020 |
| | | EP 3612990 A1 | 26-02-2020 |
| | | EP 3612991 A1 | 26-02-2020 |
| | | EP 3613026 A1 | 26-02-2020 |
| | | JP 2020517014 A | 11-06-2020 |
| | | KR 20190141694 A | 24-12-2019 |
| | | PH 12019550191 A1 | 29-06-2020 |

EPO FORM P0460

page 1 de 2

## ANNEXE AU RAPPORT DE RECHERCHE EUROPEENNE
## RELATIF A LA DEMANDE DE BREVET EUROPEEN NO.

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

**17-12-2021**

| Document brevet cité au rapport de recherche | Date de publication | Membre(s) de la famille de brevet(s) | Date de publication |
|---|---|---|---|
| | | RU 2019136750 A | 18-05-2021 |
| | | SG 11201909175X A | 28-11-2019 |
| | | US 2018299943 A1 | 18-10-2018 |
| | | US 2018300601 A1 | 18-10-2018 |
| | | US 2018300602 A1 | 18-10-2018 |
| | | US 2018300603 A1 | 18-10-2018 |
| | | US 2018300604 A1 | 18-10-2018 |
| | | US 2018300605 A1 | 18-10-2018 |
| | | US 2018300606 A1 | 18-10-2018 |
| | | US 2018300607 A1 | 18-10-2018 |
| | | US 2018300613 A1 | 18-10-2018 |
| | | US 2018300614 A1 | 18-10-2018 |
| | | US 2018300615 A1 | 18-10-2018 |
| | | US 2018300616 A1 | 18-10-2018 |
| | | US 2018300617 A1 | 18-10-2018 |
| | | US 2018300633 A1 | 18-10-2018 |
| | | US 2018300634 A1 | 18-10-2018 |
| | | US 2020233820 A1 | 23-07-2020 |
| | | US 2020356500 A1 | 12-11-2020 |
| | | US 2021232904 A1 | 29-07-2021 |
| | | WO 2018194845 A1 | 25-10-2018 |
| | | WO 2018194846 A1 | 25-10-2018 |
| | | WO 2018194847 A1 | 25-10-2018 |
| | | WO 2018194848 A1 | 25-10-2018 |
| | | WO 2018194849 A1 | 25-10-2018 |
| | | WO 2018194850 A1 | 25-10-2018 |
| | | WO 2018194851 A1 | 25-10-2018 |
| | | WO 2018194939 A1 | 25-10-2018 |
| | | WO 2018194940 A1 | 25-10-2018 |
| | | WO 2018194988 A1 | 25-10-2018 |
| | | WO 2018194993 A1 | 25-10-2018 |
| | | WO 2018194994 A2 | 25-10-2018 |
| | | WO 2018194995 A1 | 25-10-2018 |
| | | WO 2018194996 A1 | 25-10-2018 |
| | | WO 2018194998 A1 | 25-10-2018 |
| | | ZA 201905874 B | 25-11-2020 |
| ---------------------------------------- | | -------------------------------- | |
| US 2017103316 A1 | 13-04-2017 | DE 202016107443 U1 | 18-01-2017 |
| | | TW 201706871 A | 16-02-2017 |
| | | US 10438117 B1 | 08-10-2019 |
| | | US 2017103316 A1 | 13-04-2017 |
| | | US 2020111003 A1 | 09-04-2020 |
| | | WO 2016186811 A1 | 24-11-2016 |
| ---------------------------------------- | | -------------------------------- | |

EPO FORM P0460

Pour tout renseignement concernant cette annexe : voir Journal Officiel de l'Office européen des brevets, No.12/82

**page 2 de 2**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **K. FUKUSHIMA.** Neocognitron: A self-organizing neural network model for a mechanism of pattern récognition unaffected by shift in position. *Biological Cybernetics,* 1980, vol. 36 (4), ISSN 0340-1200, 193-202